(19) Europäisches Patentamt
European Patent Office
Office européen des brevets

(11) EP 3 509 143 A1

(12) EUROPEAN PATENT APPLICATION
published in accordance with Art. 153(4) EPC

(43) Date of publication:
10.07.2019 Bulletin 2019/28

(51) Int Cl.:
H01M 4/525 (2010.01)　　H01M 4/505 (2010.01)

(21) Application number: 17846675.1

(22) Date of filing: 31.08.2017

(86) International application number:
PCT/JP2017/031443

(87) International publication number:
WO 2018/043671 (08.03.2018 Gazette 2018/10)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 31.08.2016　JP 2016169816

(71) Applicants:
• Sumitomo Chemical Company Limited
Tokyo 104-8260 (JP)
• Tanaka Chemical Corporation
Fukui-shi
Fukui 910-3131 (JP)

(72) Inventors:
• IMANARI Yuichiro
Ehime 792-8521 (JP)
• MATSUMOTO Kayo
Fukui-shi
Fukui 910-3131 (JP)
• IIDA Yasutaka
Fukui-shi
Fukui 910-3131 (JP)

(74) Representative: Vossius & Partner
Patentanwälte Rechtsanwälte mbB
Siebertstrasse 3
81675 München (DE)

(54) POSITIVE ELECTRODE ACTIVE MATERIAL FOR LITHIUM SECONDARY BATTERIES, POSITIVE ELECTRODE FOR LITHIUM SECONDARY BATTERIES, AND LITHIUM SECONDARY BATTERY

(57) The present invention relates to a positive electrode active material for a lithium secondary battery, comprising a powder of a lithium metal composite oxide represented by formula (1) below: $Li[Li_x(Ni_{(1-y-z-w)}Co_yMn_zM_w)_{1-x}]O_2$ (1) (wherein M is one or more elements selected from the group consisting of Fe, Cu, Ti, Mg, Al, W, B, Mo, Nb, Zn, Sn, Zr, Ga and V, $-0.1 \leqq x \leqq 0.2$, $0 < y \leqq 0.4$, $0 < z \leqq 0.4$, $0 \leqq w \leqq 0.1$, $0.25 < y + z + w$), wherein the powder of lithium metal composite oxide includes primary particles and secondary particles that are aggregates of the primary particles, a BET specific surface area of the positive electrode active material for the lithium secondary battery is 1 $m^2/g$ or more and 3 $m^2/g$ or less, and an average crushing strength of the secondary particles is 10 MPa or more and 100 MPa or less.

EP 3 509 143 A1

## Description

TECHNICAL FIELD

The present invention relates to a positive electrode active material for lithium secondary batteries, a positive electrode for lithium secondary batteries and a lithium secondary battery.

Priority is claimed on Japanese Patent Application No. 2016-169816, filed August 31, 2016, the contents of which are incorporated herein by reference.

BACKGROUND ART

Lithium-containing composite oxides are used as positive electrode active materials for lithium secondary batteries. Lithium secondary batteries have already been put to practical use not only as compact power supplies for portable telephones, notebook computers and the like, but also as medium- and large-sized power supplies for automobile use, electric power storage use, etc.

With a view to improving the performance of lithium secondary batteries, such as the initial discharge capacity, attempts have been made that focus on the particle strength of the positive electrode active material for a lithium secondary battery (for example, Patent Documents 1 to 6).

Prior Art References

Patent Document

Patent Document 1: Japanese Unexamined Patent Application Publication No. 2001-80920

Patent Document 2: Japanese Unexamined Patent Application Publication No. 2004-335152

Patent Document 3 : International Patent Application Publication No. 2005/124898

Patent Document 4: Japanese Unexamined Patent Application Publication No. 2007-257985

Patent Document 5: Japanese Unexamined Patent Application Publication No. 2011-119092

Patent Document 6: Japanese Unexamined Patent Application Publication No. 2013-232318

SUMMARY OF THE INVENTION

Problems to be Solved by the Invention

As the application fields of lithium secondary batteries are expanding, positive electrode active materials for lithium secondary batteries are required to have further improved initial charge/discharge efficiency.

However, in the positive electrode active materials for lithium secondary batteries as described in Patent Documents 1 to 6, there is room for improvement from the viewpoint of improvement of the initial charge/discharge efficiency.

The present invention has been made in view of the above circumstances, and it is an object of the present invention to provide a positive electrode active material for a lithium secondary battery excellent in initial charge/discharge efficiency, a positive electrode for a lithium secondary battery using the positive electrode active material for a lithium secondary battery, and a lithium secondary battery having the positive electrode for a lithium secondary battery.

Means to Solve the Problems

Specifically, the present invention is as enumerated in [1] to [9] below.

[1] A positive electrode active material for a lithium secondary battery, including a powder of a lithium metal composite oxide represented by formula (1) below:

$$\mathrm{Li[Li}_x(\mathrm{Ni}_{(1-y-z-w)}\mathrm{Co}_y\mathrm{Mn}_z\mathrm{M}_w)_{1-x}]\mathrm{O}_2 \qquad (1),$$

wherein M is one or more elements selected from the group consisting of Fe, Cu, Ti, Mg, Al, W, B, Mo, Nb, Zn, Sn, Zr, Ga and V, $-0.1 \leqq x \leqq 0.2$, $0 < y \leqq 0.4$, $0 < z \leqq 0.4$, $0 \leqq w \leqq 0.1$, $0.25 < y + z + w$, wherein the powder of lithium metal composite oxide comprises primary particles and secondary particles that are aggregates of the primary particles, a BET specific surface area of the positive electrode active material is 1 m$^2$/g or more and 3 m$^2$/g or less, and an average crushing strength of the secondary particles is 10 MPa or more and 100 MPa or less.

[2] The positive electrode active material according to [1], wherein $y < z$ in the formula (1).

[3] The positive electrode active material according to [1] or [2], which has an average particle diameter of 2 $\mu$m or more and 10 $\mu$m or less.

[4] The positive electrode active material according to any one of [1] to [3], wherein a product of A and B is 0.014 or more and 0.030 or less, wherein A is a half width of a diffraction peak within a peak region of $2\theta = 18.7 \pm 1$ °, and B is a half width of a diffraction peak within a peak region of $2\theta = 44.4 \pm 1$ °, each of the diffraction peaks being obtained by a powder X-ray diffraction measurement using CuK$\alpha$ ray.

[5] The positive electrode active material according to [4], wherein the half width A is within a range of 0.115 or more and 0.165 or less.

[6] The positive electrode active material according to [4] or [5], wherein the half width value B is within a range of 0.120 or more and 0.180 or less.

[7] The positive electrode active material according to any one of [1] to [6], wherein an amount of lithium carbonate component contained in the positive electrode active material is 0.4 % by mass or less based on the total mass of the positive electrode active material.

[8] The positive electrode active material according to any one of [1] to [7], wherein an amount of lithium hydroxide component contained in the positive electrode active material is 0.35 % by mass or less based on the total mass of the positive electrode active material.

[9] A positive electrode for a lithium secondary battery, including the positive electrode active material of any one of [1] to [8].

[10] A lithium secondary battery, including the positive electrode of [9].

Effect of the Invention

The present invention can provide a positive electrode active material for a lithium secondary battery excellent in initial charge/discharge efficiency, a positive electrode for a lithium secondary battery using the positive electrode active material for a lithium secondary battery, and a lithium secondary battery having the positive electrode for a lithium secondary battery.

BRIEF DESCRIPTION OF THE DRAWINGS

FIG. 1A is a schematic view showing one example of a lithium ion secondary battery.
FIG. 1B is a schematic view showing one example of a lithium ion secondary battery.
FIG. 2A is a schematic view for explaining the effect of the present invention.
FIG. 2B is a schematic view of a cross section of a secondary particle conventionally used, which has a dense grain structure.
FIG. 3 is an image (hereinafter also referred to as SEM image) obtained by observing a cross section of a secondary particle in Example 2 with a scanning electron microscope (hereinafter also referred to as SEM).
FIG. 4 is an SEM image of a cross section of a secondary particle in Comparative Example 4.

DESCRIPTION OF THE EMBODIMENTS

<Positive Electrode Active Material for Lithium Secondary Battery>

The positive electrode active material (for a lithium secondary battery) of the present invention includes a powder of a lithium metal composite oxide represented by formula (1) below:

$$Li[Li_x(Ni_{(1-y-z-w)}Co_yMn_zM_w)_{1-x}]O_2 \qquad (1),$$

wherein M is one or more elements selected from the group consisting of Fe, Cu, Ti, Mg, Al, W, B, Mo, Nb, Zn, Sn, Zr, Ga and V, $-0.1 \leqq x \leqq 0.2$, $0 < y \leqq 0.4$, $0 < z \leqq 0.4$, $0 \leqq w \leqq 0.1$, $0.25 < y + z + w$,

wherein the powder of lithium metal composite oxide includes primary particles and secondary particles that are aggregates of the primary particles, a BET specific surface area of the positive electrode active material for the lithium secondary battery is 1 $m^2/g$ or more and 3 $m^2/g$ or less, and an average crushing strength of the secondary particles is 10 MPa or more and 100 MPa or less.

In the present specification, the term "primary particle" means the minimum unit observed as an independent particle by SEM, and the particle is a single crystal or a polycrystal in which crystallites are assembled.

In the present specification, the term "secondary particle" means a particle formed by aggregation of primary particles and can be observed by SEM.

The positive electrode active material (for a lithium secondary battery) of the present embodiment (hereinafter also referred to as "positive electrode active material") has a BET specific surface area within a specific range, and an average crushing strength of secondary particles within a specific range. The lithium metal composite oxide powder used in the present embodiment has a low particle strength because the average crushing strength of the secondary particles is within the specific range. The reason for this is speculated to reside in the secondary particle structure with a small contact area between the primary particles and with many voids. That is, the positive electrode active material of the present embodiment contains the secondary particles having many voids and has increased contact area with the electrolytic solution. For this reason, desorption (charging) and insertion (discharge) of lithium ions proceed easily inside the secondary particles. Therefore, the positive electrode active material of the present embodiment is excellent in initial charge/discharge efficiency.

In the present embodiment, the lithium metal composite oxide is represented by formula (1) below:

$$Li[Li_x(Ni_{(1-y-z-w)}Co_yMn_zM_w)_{1-x}]O_2 \qquad (1),$$

wherein M is one or more elements selected from the group consisting of Fe, Cu, Ti, Mg, Al, W, B, Mo, Nb, Zn, Sn, Zr, Ga and V, $-0.1 \leqq x \leqq 0.2$, $0 < y \leqq 0.4$, $0 < z \leqq 0.4$, $0 \leqq w \leqq 0.1$, $0.25 < y + z + w$.

For obtaining a lithium secondary battery with higher cycle performance, x in the formula (1) is preferably more than 0, more preferably 0.01 or more, and still more preferably 0.02 or more. For obtaining a lithium secondary battery with higher initial coulombic efficiency, x in the formula (1) is preferably 0.1 or less, more preferably 0.08 or less, still more preferably 0.06 or less.

The upper limit values and lower limit values of x can be arbitrarily combined.

For example, x is preferably more than 0 and 0.1 or less, more preferably 0.01 or more and 0.08 or less, and still more preferably 0.02 or more and 0.06 or less.

In the present specification, the expression "high cycle performance" means that a discharge capacity retention after repeating a cycle of charge and discharge is high.

For obtaining a lithium secondary battery having low battery resistance at low temperature (-15 °C to 0 °C), y in the composition formula (1) is preferably 0.005 or more, more preferably 0.01 or more, and even more preferably 0.05 or more. For obtaining a lithium secondary battery with high thermal stability, y in the composition formula (1) is preferably 0.4 or less, more preferably 0.35 or less, and more preferably 0.33 or less.

The upper limit values and lower limit values of y can be arbitrarily combined.

For example, y is preferably 0.005 or more and 0.4 or less, more preferably 0.01 or more and 0.35 or less, and still more preferably 0.05 or more and 0.33 or less.

For obtaining a lithium secondary battery with higher cycle performance, z in the formula (1) is preferably 0.01 or more, more preferably 0.03 or more, and still more preferably 0.1 or more. For obtaining a lithium secondary battery with higher storage stability under high temperature conditions (e.g., at 60 °C), z in the formula (1) is preferably 0.4 or less, more preferably 0.38 or less, and still more preferably 0.35 or less.

The upper limit values and lower limit values of z can be arbitrarily combined.

For example, z is preferably 0.01 or more and 0.4 or less, more preferably 0.03 or more and 0.38 or less, and still more preferably 0.1 or more and 0.35 or less.

For obtaining a lithium secondary battery having low battery resistance at low temperature (-15 °C to 0 °C), w in the composition formula (1) is preferably more than 0, more preferably 0.0005 or more, and even more preferably 0.001 or more. For obtaining a lithium secondary battery with higher discharge capacity at high current rate, w in the composition formula (1) is preferably 0.09 or less, more preferably 0.08 or less, and still more preferably 0.07 or less.

The upper limit values and lower limit values of w can be arbitrarily combined.

For example, w is preferably more than 0 and 0.09 or less, more preferably 0.0005 or more and 0.08 or less, and still more preferably 0.001 or more and 0.07 or less.

M in the composition formula (1) represents one or more elements selected from the group consisting of Fe, Cu, Ti, Mg, Al, W, B, Mo, Nb, Zn, Sn, Zr, Ga and V.

M in the composition formula (1) is preferably Ti, Mg, Al, W, B or Zr from the viewpoint of obtaining a lithium secondary battery with higher cycle performance, and is preferably Al, W, B or Zr from the viewpoint of obtaining a lithium secondary battery with higher thermal stability.

(BET Specific Surface Area)

In the present embodiment, for obtaining a lithium secondary battery with high initial charge/discharge efficiency, the BET specific surface area ($m^2$/g) of the positive electrode active material for a lithium secondary battery is preferably 1 $m^2$/g or more, more preferably 1.05 $m^2$/g or more, and even more preferably 1.1 $m^2$/g or more. Further, for improving the handling of the positive electrode active material for a lithium secondary battery, the BET specific surface area is preferably 3 $m^2$/g or less, more preferably 2.95 $m^2$/g or less, and even more preferably 2.9 $m^2$/g or less.

The upper limit values and lower limit values of the BET specific surface area can be arbitrarily combined.

For example, the BET specific surface area is preferably 1 $m^2$/g or more and 3 $m^2$/g or less, more preferably 1.05 $m^2$/g or more and 2.95 $m^2$/g or less, and even more preferably 1.1 $m^2$/g or more and 2.9 $m^2$/g or less.

The BET specific surface area ($m^2$/g) in the present embodiment can be measured by Macsorb (registered trademark) manufactured by Mountech Co., Ltd. with respect to 1 g of the positive electrode active material (for a lithium secondary battery) that has been dried in a nitrogen atmosphere at 105 °C for 30 minutes.

(Average Crushing Strength)

In the present embodiment, the powder of lithium metal composite oxide includes primary particles and secondary particles formed by aggregation of the primary particles.

In the present embodiment, for obtaining a lithium secondary battery with high initial charge/discharge efficiency, the average crushing strength of the secondary particles is preferably 10 MPa or more, more preferably 11 MPa or more, even more preferably 12 MPa or more. For obtaining a lithium secondary battery with higher discharge capacity at high discharge rate, the average crushing strength is preferably 100 MPa or less, more preferably 99 MPa or less, and still more preferably 98 MPa or less.

The upper limit values and lower limit values of the average crushing strength can be arbitrarily combined.

For example, the average crushing strength of the secondary particles is preferably 10 MPa or more and 100 MPa or less, more preferably 11 MPa or more and 99 MPa or less, and even more preferably 12 MPa or more and 98 MPa or less.

In another aspect of the present invention, the average crushing strength of the secondary particles is preferably 10 MPa or more and 60 MPa or less, more preferably 10 MPa or more and 40 MPa or less, and even more preferably 15 MPa or more and 35 MPa or less.

A method of measuring the average crushing strength of the secondary particles in the present embodiment will be described later.

The secondary particles having a dense grain structure as conventionally used have an average crushing strength exceeding 100 MPa. By contrast, secondary particles having an average crushing strength within the above-specified range are particles having a low particle strength and a large amount of voids as compared to the conventional secondary particles of a dense grain structure.

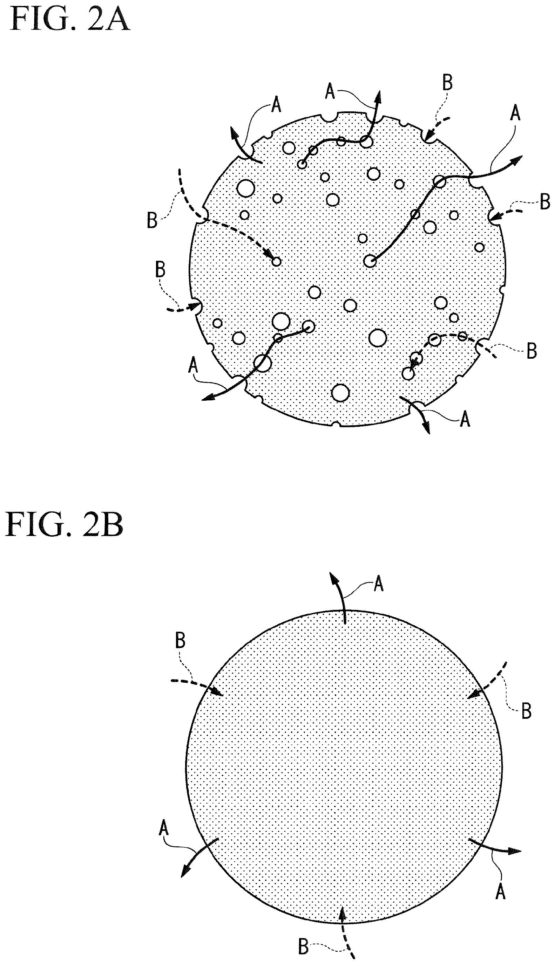

FIG. 2A is a schematic view of a cross section of a secondary particle of this embodiment. As shown in FIG. 2A, since the positive electrode active material of this embodiment has many voids, a larger contact area with the electrolyte is secured. For this reason, desorption of lithium ions (charge) indicated by reference symbol A in FIG. 2A and insertion of lithium ions (discharge) indicated by reference symbol B proceed easily in the interior and on the surface of the secondary particles. Therefore, the initial discharge efficiency can be improved.

FIG. 2B is a schematic view of a cross section of a secondary particle conventionally used, which has a dense grain structure. As shown in FIG. 2B, in the case of a dense grain structure, desorption of lithium ions (charge) indicated by reference symbol A and insertion of lithium ions (discharge) indicated by reference symbol B proceed only in the vicinity of the surface of the particle. On the other hand, as described above, in the present embodiment, since the desorption and insertion of lithium ions proceed not only in the vicinity of the surface of the secondary particle but also in the interior of the secondary particle, the initial discharge efficiency can be improved.

In the present embodiment, the average crushing strength of secondary particles is a value measured by the following measuring method.

[Method for Measuring Average Crushing Strength]

In the present invention, the "average crushing strength" of the secondary particles present in the lithium metal composite oxide powder means a value measured by the following method.

First, with respect to the lithium metal composite oxide powder, test pressure (load) was applied to one arbitrarily selected secondary particle using "micro compression tester MCT-510", manufactured by Shimadzu Corporation to measure the deformation amount of the secondary particles. With the test force (P) being defined as a pressure value at which, when the test pressure is gradually raised, the deformation amount becomes maximum while the test pressure remains almost constant, the crushing strength (St) is calculated by Hiramatsu et al's equation (Journal of the Mining and Metallurgical Institute of Japan, vol. 81 (1965)). This procedure is performed with respect to total of five arbitrarily selected secondary particles, and the average crushing strength is calculated as an average of the obtained 5 values of the crushing strength.

$$St = 2.8 \times P / (\pi \times d \times d) \text{ (d: secondary particle diameter)} \quad (A)$$

In the above formula (A), "d: secondary particle diameter" may be a value obtained by measurement using an optical microscope attached to the micro compression tester MCT-510.

In the present invention, the amount of the lithium metal composite oxide powder relative to the total mass of the positive electrode active material for a lithium secondary battery is not particularly limited, but the amount is, for example, preferably 10 % by mass or more and 100 % by mass or less, more preferably 30 % by mass or more and 100 % by mass or less, and even more preferably 50 % by mass or more and 100 % by mass or less.

(Composition of Transition Metals)

In the present embodiment, it is preferable that $y < z$ in the formula (1) for obtaining a lithium secondary battery having high cycle performance. When $y \geq z$, the cycle performance of the lithium secondary battery may deteriorate in some cases.

(Average Particle Diameter)

In the present embodiment, for improving the handling of the positive electrode active material for a lithium secondary battery of the present embodiment, the average particle diameter of the positive electrode active material is preferably 2 $\mu$m or more, more preferably 2.1 $\mu$m or more, even more preferably 2.2 $\mu$m or more.

For obtaining a lithium secondary battery with higher discharge capacity at high discharge rate, the average particle diameter is preferably 10 $\mu$m or less, more preferably 9.9 $\mu$m or less, and still more preferably 9.8 $\mu$m or less.

The upper limit values and lower limit values of the average particle diameter can be arbitrarily combined.

For example, the average particle diameter of the positive electrode active material for a lithium secondary battery is preferably 2 $\mu$m or more and 10 $\mu$m or less, more preferably 2.1 $\mu$m or more and 9.9 $\mu$m or less, even more preferably 2.2 $\mu$m or more and 9.8 $\mu$m or less.

In the present invention, the "average particle diameter" of the positive electrode active material for a lithium secondary battery denotes a value measured by the following method (laser diffraction scattering method).

A particle size distribution measurement is performed using a laser diffraction particle size analyzer (model number: LA-950, manufactured by Horiba, Ltd.) with respect to a dispersion obtained by charging 0.1 g of the positive electrode active material for a lithium secondary battery into 50 ml of a 0.2 % by mass aqueous sodium hexametaphosphate solution so as to disperse the positive electrode active material in the solution. The dispersion is subjected to a particle size distribution measurement, whereby the volume-based particle size distribution is determined. From the obtained cumulative particle size distribution curve, the particle diameter ($D_{50}$) at a 50 % cumulation measured from the smaller particle side is determined as the average particle diameter of the positive electrode active material for a lithium secondary battery.

In the present embodiment, since the BET specific surface area of the positive electrode active material for a lithium secondary battery is within the range specified above and the average crushing strength of the secondary particles is within the range specified above, the initial charge/discharge efficiency can be improved. Further, the BET specific surface area and the average crushing strength that are in the ranges specified above increase the contact area between the lithium metal composite oxide and the electrolytic solution, and can lower the battery resistance under low temperature conditions (-15 °C to 0 °C) at which the viscosity of the electrolytic solution increases. Furthermore, by addition of the element M to the composition shown by the formula (1), the conductivity of lithium ions in the lithium metal composite oxide increases and the battery resistance under low temperature conditions can be lowered.

(Half Width)

In the present embodiment, for obtaining a lithium secondary battery with higher discharge capacity at high discharge rate, a product of A and B is preferably 0.014 or more, more preferably 0.015 or more, and even more preferably 0.016 or more, wherein A is a half width of a diffraction peak within a peak region of $2\theta = 18.7 \pm 1$ °, and B is a half width of a diffraction peak within a peak region of $2\theta = 44.4 \pm 1$ °, each of the diffraction peaks being obtained by a powder X-ray diffraction measurement. For obtaining a lithium secondary battery with higher cycle performance, the product of A and B is preferably 0.030 or less, more preferably 0.029 or less, and even more preferably 0.028 or less.

The upper limit values and lower limit values of the product of A and B can be arbitrarily combined.

For example, the product of A and B is preferably 0.014 or more and 0.030 or less, more preferably 0.015 or more and 0.029 or less, and even more preferably 0.016 or more and 0.028 or less.

First, for the positive electrode active material, a diffraction peak within $2\theta = 18.7 \pm 1$ ° (hereinafter also referred to as peak A ') and a diffraction peak within $2\theta = 44.4 \pm 1$ ° (hereinafter also referred to as peak B ') are determined by the powder X-ray diffraction measurement using CuK$\alpha$ ray.

Further, the half width A of the determined peak A' and the half width B of the peak B' are calculated, from which the crystallite size can be calculated by the Scherrer equation $D = K\lambda/B \cos\theta$ [D: crystallite size, K: Scherrer constant, B: half width, $\lambda$: X-ray wavelength, $\theta$: diffraction angle (e.g., $2\theta = 18.7 \pm 1$ ° or $2\theta = 44.4 \pm 1$ °)].

The determination of crystallite size by the aforementioned formula is a technique that has been conventionally used for this purpose (see, for example, "X-ray structural analysis - determination of arrangement of atoms -", third edition issued April 30, 2002, Yoshio Waseda, Eiichiro Matsubara).

In the present embodiment, for obtaining a lithium secondary battery with higher discharge capacity at high current rate, the range of the half width A of the positive electrode active material is preferably 0.115 or more, more preferably 0.116 or more, and still more preferably 0.117 or more. For obtaining a lithium secondary battery with higher cycle performance, the half width value A is preferably 0.165 or less, more preferably 0.164 or less, and still more preferably 0.163 or less.

The upper limit values and lower limit values of the half width A can be arbitrarily combined.

For example, the half width A of the positive electrode active material is preferably 0.115 or more and 0.165 or less, more preferably 0.116 or more and 0.164 or less, and even more preferably 0.117 or more and 0.163 or less.

In the present embodiment, for obtaining a lithium secondary battery with higher discharge capacity at high current rate, the range of the half width B of the positive electrode active material is preferably 0.120 or more, more preferably 0.125 or more, and still more preferably 0.126 or more. For obtaining a lithium secondary battery with higher cycle performance, the half width value B is preferably 0.180 or less, more preferably 0.179 or less, and still more preferably 0.178 or less.

The upper limit values and lower limit values of the half width value B can be arbitrarily combined.

For example, the half width B of the positive electrode active material is preferably 0.120 or more and 0.180 or less, more preferably 0.125 or more and 0.179 or less, and even more preferably 0.126 or more and 0.178 or less.

(Layered Structure)

The crystal structure of the lithium-nickel composite oxide is a layered structure, and more preferably a hexagonal crystal structure or a monoclinic crystal structure.

The hexagonal crystal structure belongs to any one of the space groups selected from the group consisting of P3, $P3_1$, $P3_2$, R3, P-3, R-3, P312, P321, $P3_112$, $P3_121$, $P3_212$, $P3_221$, R32, P3m1, P31m, P3c1, P31c, R3m, R3c, P-31m, P-31c, P-3m1, P-3c1, R-3m, R-3c, P6, $P6_1$, $P6_5$, $P6_2$, $P6_4$, $P6_3$, P-6, P6/m, $P6_3$/m, P622, $P6_1$22, $P6_5$22, $P6_2$22, $P6_4$22, $P6_3$22, P6mm, P6cc, $P6_3$cm, $P6_3$mc, P-6m2, P-6c2, P-62m, P-62c, P6/mmm, P6/mcc, $P6_3$/mcm, and P63/mmc.

The monoclinic crystal structure belongs to any one of the space groups selected from the group consisting of P2, $P2_1$, C2, Pm, Pc, Cm, Cc, P2/m, $P2_1$/m, C2/m, P2/c, $P2_1$/c, and C2/c.

Among the aforementioned crystal structures, from the viewpoint of obtaining a lithium secondary battery having high discharge capacity, the especially preferable crystal structure of the positive electrode active material is a hexagonal crystal structure belonging to a space group of R-3m or a monoclinic crystal structure belonging to a space group of C2/m.

The lithium compound used in the present invention is not particularly limited as long as a compound satisfying the formula (1) can be obtained, and any of lithium carbonate, lithium nitrate, lithium sulfate, lithium acetate, lithium hydroxide, lithium oxide, lithium chloride and lithium fluoride may be used individually or in the form of a mixture of two or more of these lithium compounds. Among these, either one or both of lithium hydroxide and lithium carbonate are preferable.

For improving the handling of the positive electrode active material for a lithium secondary battery, the amount of lithium carbonate component contained in the positive electrode active material is preferably 0.4 % by mass or less, more preferably 0.39 % by mass or less, and still more preferably 0.38 % by mass or less, based on the total mass of the positive electrode active material.

In one aspect of the present invention, the amount of lithium carbonate component contained in the positive electrode active material is preferably 0 % by mass or more and 0.4 % by mass or less, more preferably 0.001 % by mass or more and 0.39 % by mass or less, and still more preferably 0.01 % by mass or more and 0.38 % by mass or less, based on the total mass of the positive electrode active material.

For improving the handling of the positive electrode active material for a lithium secondary battery, the amount of lithium hydroxide component contained in the positive electrode active material is preferably 0.35 % by mass or less, more preferably 0.25 % by mass or less, and still more preferably 0.2 % by mass or less, based on the total mass of the positive electrode active material.

In another aspect of the present invention, the amount of lithium hydroxide component contained in the positive electrode active material is preferably 0 % by mass or more and 0.35 % by mass or less, more preferably 0.001 % by mass or more and 0.25 % by mass or less, and still more preferably 0.01 % by mass or more and 0.20 % by mass or less, based on the total mass of the positive electrode active material.

As described below, by adjusting the calcination temperature, calcination time, calcination atmosphere and the like, it is possible to reduce the lithium carbonate component and lithium hydroxide component contained in the positive active material for a lithium secondary battery.

The amounts of lithium carbonate component and lithium hydroxide component contained in the positive electrode active material for a lithium secondary battery can be determined by neutralization titration with an acidic solution. Specifically, the positive electrode active material for a lithium secondary battery is treated by contact with pure water to allow the lithium carbonate component and the lithium hydroxide component to elute into the pure water. By neutralization titration of the eluate with an acidic solution such as hydrochloric acid, the amounts of the lithium carbonate component and the lithium hydroxide component can be determined. More specific operations and methods for calculating the amounts of the lithium carbonate component and the lithium hydroxide component are described in the Examples.

[Method for Producing Lithium Metal Composite Oxide]

In producing the positive electrode active material of the present invention (for a lithium secondary battery) including the lithium metal composite oxide, it is preferred that a metal composite compound is first prepared, which includes essential metals other than lithium, i.e., Ni, Co and Mn, and at least one optional element selected from Fe, Cu, Ti, Mg, Al, W, B, Mo, Nb, Zn, Sn, Zr, Ga and V, and then the metal composite compound is calcinated with a suitable lithium compound. As the metal composite compound, it is preferable to use a metal composite hydroxide or a metal composite oxide. Hereinbelow, as to one example of the method for producing the positive electrode active material, explanations are made separately on the step of producing the metal composite compound and the step of producing the lithium metal composite oxide.

(Step of Producing Metal Composite Compound)

The metal composite compound can be produced by the conventionally known batch co-precipitation method or continuous co-precipitation method.

Hereinbelow, the method for producing the metal composite compound is explained taking as an example the case of production of a metal composite hydroxide containing nickel, cobalt and manganese as metals.

First, a nickel salt solution, a cobalt salt solution, a manganese salt solution and a complexing agent are reacted by the co-precipitation method, especially, a continuous method described in Japanese Patent Unexamined Publication No. 2002-201028 to produce a metal composite hydroxide represented by $Ni_xCo_yMn_z(OH)_2$, wherein $x + y + z = 1$.

There is no particular limitation with respect to a nickel salt as a solute in the aforementioned nickel salt solution. For example, any of nickel sulfate, nickel nitrate, nickel chloride and nickel acetate can be used. As a cobalt salt as a solute in the cobalt salt solution, for example, any of cobalt sulfate, cobalt nitrate, cobalt chloride and cobalt acetate can be used. As a manganese salt as a solute in the manganese salt solution, for example, any of manganese sulfate, manganese nitrate, manganese chloride and manganese acetate can be used. These metal salts are used in a ratio corresponding to the composition ratio of the aforementioned $Ni_xCo_yMn_z(OH)_2$. That is, the amount of each metal salt is set so that the molar ratio of nickel, cobalt and manganese in a mixed solution containing the metal salts equals an intended ratio of x: y: z. As a solvent, water can be used.

The complexing agent is a substance capable of forming a complex with ions of nickel, cobalt and manganese in an aqueous solution, the examples of which include an ammonium ion donor (ammonium sulfate, ammonium chloride, ammonium carbonate, ammonium fluoride, etc.), hydrazine, ethylenediaminetetraacetic acid, nitrilotriacetic acid, uracil diacetate and glycine.

The complexing agent may not be contained in a reaction system for producing the composite hydroxide. When the complexing agent is contained in the reaction system, for example, the molar ratio of the complexing agent relative to the total number of moles of the metal salts is greater than 0 and 2.0 or less. Further, the complexing agent may be added in the form of a mixture thereof with the metal salts, or may be added separately from the mixed solution of the metal salts.

For adjusting the pH value of the aqueous solution during the precipitation, if necessary, an alkali metal hydroxide (such as sodium hydroxide or potassium hydroxide) may be added.

Successive addition of the aforementioned nickel salt solution, cobalt salt solution and manganese salt solution as well as the complexing agent to a reaction vessel allows nickel, cobalt and manganese to react with each other, resulting in the generation of $Ni_xCo_yMn_z(OH)_2$. The reaction is performed with the temperature in the reaction vessel being regulated, for example, within the range of 20 °C to 80 °C, preferably 30 °C to 70 °C and the pH value in the reaction vessel being regulated, for example, within the range of 9 to 13, preferably 11 to 13, while appropriately agitating the content of the reaction vessel. The reaction vessel is one which allows the overflow for separation of the precipitated reaction product.

With respect to various properties of the lithium metal composite oxide to be finally obtained as a result of carrying out the process as described below, or various properties of the positive electrode active material (for a lithium secondary battery) containing the lithium metal composite oxide, i.e., primary particle diameter, secondary particle diameter, crystallite size, BET specific surface area and average crushing strength, such properties can be adjusted by appropriately controlling the concentrations of the metal salts to be supplied to the reaction vessel, agitation speed, reaction temperature, reaction pH, and calcination conditions described below, and the like. In particular, for achieving the desired crushing strength, pore distribution and voids of the secondary particles, a bubbling with various gases such as inert gases (e.g., nitrogen, argon and carbon dioxide), oxidizing gases (e.g., air and oxygen) or a mixture thereof may be carried out as well in addition to the control of the aforementioned conditions. As a substance for promoting the oxidation state other than gases, peroxides such as hydrogen peroxide, peroxide salts such as permanganate, perchlorate, hypochlorite, nitric acid, halogen, ozone, etc. can be used. As a substance for promoting the reduction state other than gases, organic acids such as oxalic acid and formic acid, sulfites, hydrazine, etc. can be used.

For example, when the reaction pH in the reaction vessel is increased, the primary particle diameter of the metal composite compound is reduced, so that a positive electrode active material for a lithium secondary battery having a high BET specific surface area is likely to be obtained. On the other hand, when the reaction pH is lowered, the primary particle diameter of the metal composite compound is increased, so that a positive electrode active material for a lithium secondary battery having a low BET specific surface area is likely to be obtained. Further, when the oxidation state in the reaction vessel is increased, a metal composite oxide having many voids is likely to be obtained. On the other hand, when the oxidation state is lowered, a dense metal composite compound is likely to be obtained. The reaction pH and the oxidation state may be respectively controlled appropriately such that a metal composite compound having desired physical properties can be obtained in the end.

The BET specific surface area of the positive electrode active material (for a lithium secondary battery) of the present invention and the average crushing strength of secondary particles of the lithium metal composite oxide powder can be regulated to fall within the respective ranges specified in the present invention by using the above metal composite and controlling the calcination conditions described below and the like.

The reaction conditions can be optimized while monitoring the various physical properties of the final lithium-containing composite oxide to be obtained since the optimal reaction conditions may vary depending on the size of the reaction vessel used, etc.

After the reaction as described above, the resulting precipitate of the reaction product is washed with water and, then, dried, followed by isolation of a nickel-cobalt-manganese composite hydroxide as the nickel-cobalt-manganese composite compound. If necessary, the resulting may be washed with weak acid water or an alkaline solution containing sodium hydroxide or potassium hydroxide.

In the above example, a nickel-cobalt-manganese composite hydroxide is produced; however, a nickel-cobalt-manganese composite oxide may be produced instead. The nickel-cobalt-manganese composite oxide can be prepared by, for example, performing a step of bringing the coprecipitate slurry as described above into contact with an oxidizing agent or a step of heat-treating the nickel-cobalt-manganese composite oxide.

(Production Process of Positive Electrode Active Material for Lithium Secondary Battery Containing Lithium Metal Composite Oxide)

After drying the metal composite oxide or the metal composite hydroxide, the dried product is mixed with a lithium compound. The drying conditions are not particularly limited, and may be, for example, any of the following conditions: conditions not allowing oxidation/reduction of the metal composite oxide or the metal composite hydroxide (oxides → oxides, hydroxides → hydroxide), conditions allowing oxidation of the metal composite hydroxide (hydroxide → oxide), and conditions allowing reduction of the metal composite oxide (oxides → hydroxide). For providing conditions not allowing oxidation/reduction, it is possible to use an inert gas such as nitrogen, helium or argon. For providing conditions allowing oxidation of the metal composite hydroxide, oxygen or air may be used.

Further, for providing conditions allowing reduction of the metal composite oxide, a reducing agent such as hydrazine or sodium sulfite may be used in an inert gas atmosphere. As the lithium compound, any of lithium carbonate, lithium nitrate, lithium acetate, lithium hydroxide, lithium hydroxide hydrate and lithium oxide may be used individually or in the form of a mixture of two or more of these lithium salts.

After drying the metal composite oxide or the metal composite hydroxide, the resulting may be subjected to appropriate classification. The aforementioned lithium compound and the metal composite hydroxide are used in respective amounts determined in view of the composition ratio of the end product. For example, when using a nickel-cobalt-manganese composite hydroxide, the lithium compound and the metal composite hydroxide are used in a ratio corresponding to the composition ratio of $LiNi_xCo_yMn_zO_2$ (wherein, x + y + z = 1). By calcining a mixture of the nickel-cobalt-manganese composite hydroxide and the lithium compound, a lithium-nickel-cobalt-manganese composite oxide can be obtained. The calcination may be carried out in dried air, an oxygen atmosphere, an inert atmosphere or the like depending on the desired composition, and may include a plurality of heating steps if necessary.

The temperature for calcination of the metal composite oxide or metal composite hydroxide with a lithium compound such as lithium hydroxide and lithium carbonate is not particularly limited. However, for adjusting the BET specific surface area of the positive electrode active material for a lithium secondary battery or the average crushing strength of secondary particles of the lithium metal composite oxide to fall within the respective ranges specified in the present invention, the calcination temperature is preferably 600 °C or more and 1100 °C or less, more preferably 750 °C or more and 1050 °C or less, and even more preferably 800 °C or more and 1025 °C or less. When the calcination temperature is lower than 600 °C, a lithium metal complex oxide having a regular crystal structure is unlikely to be obtained, and the BET specific surface area of the positive electrode active material for a lithium secondary battery may exceed the upper limit specified in the present invention, or the average crushing strength of the secondary particles may fall below the lower limit specified in the present invention, whereby problems such as decrease in energy density (discharge capacity) or charge/discharge efficiency (discharge capacity/charge capacity) are likely to occur. That is, when the calcination temperature is 600 °C or more, a lithium metal composite oxide having a regular crystal structure can be easily obtained, whereby the BET specific surface area of the positive electrode active material for a lithium secondary battery does not exceed the upper limit specified in the present invention and the average crushing strength of the secondary particles equals or exceeds the lower limit specified in the present invention, so that problems such as decrease in energy density (discharge capacity) or charge/discharge efficiency (discharge capacity/charge capacity) are unlikely to occur. Further, when the calcination temperature is 600 °C or more, it becomes easy to reduce the amounts of the lithium carbonate component and the lithium hydroxide component contained in the positive electrode active material for a lithium secondary battery.

On the other hand, the calcination temperature exceeding 1100 °C is likely to cause the BET specific surface area of the positive electrode active material for a lithium secondary battery to fall below the lower limit specified in the present invention, or cause the average crushing strength of the secondary particles of the lithium metal composite oxide to exceed the upper limit specified in the present invention due to increased density of the particles, thereby causing a problem that the battery performance deteriorates, as well as manufacturing problems such as difficulty in obtaining the lithium metal complex oxide with an intended composition due to the volatilization of Li. Probable reason for this is that a temperature above 1100 °C accelerates a primary particle growth, resulting in excessively grown crystal particles of the lithium metal composite oxide. That is, the calcination temperature exceeding 1100 °C suppresses the volatilization of Li so that the lithium metal complex oxide with an intended composition can be easily obtained, and such a calcination temperature is likely to cause the BET specific surface area of the positive electrode active material for a lithium secondary battery to equal or exceed the lower limit specified in the present invention, and prevent the density of the particles from increasing and thereby causes the average crushing strength of the secondary particles of the lithium metal composite oxide to equal or fall below the upper limit specified in the present invention, as a result of which a problem of battery performance deterioration is unlikely to occur. With the calcination temperature being in a range of 600°C to 1100 °C, a battery having a particularly high energy density as well as excellent charge/discharge efficiency and output performance can be manufactured.

The calcination time is preferably 3 hours to 50 hours. The calcination time exceeding 50 hours does not seriously affect the battery performance but tends to result in substantially lower battery performance due to volatilization of Li. The calcination time less than 3 hours tends to result in a poor crystal growth and an inferior battery performance.

That is, when the calcination time is within 50 hours, the volatilization of Li is suppressed, and the battery performance deterioration can be prevented. When the calcination temperature is 3 hours or more, the growth of crystals proceeds favorably, and the lithium carbonate component and the lithium hydroxide component contained in the positive electrode active material for a lithium secondary battery can be decreased, whereby the battery performance can be improved. In this embodiment, the calcination time means a time period from the time when the target temperature is reached to the time when the temperature maintenance is finished, that is, a maintenance period. The temperature elevation rate until reaching the target temperature is preferably 50 °C/hour to 600 °C/hour, more preferably 75 °C/hour to 500 °C/hour, and even more preferably 100 °C/hour to 400 °C/hour.

It is also effective to perform a precalcination in advance of the aforementioned calcination. Such a precalcination is preferably performed at a temperature in the range of 300 to 850 °C for 1 to 10 hours.

The positive electrode active material for a lithium secondary battery containing a lithium metal composite oxide obtained by the calcination is appropriately classified after pulverization, thereby obtaining a positive electrode active material applicable to a lithium secondary battery.

<Lithium Secondary Battery>

Next, explanations are made on a positive electrode using the positive electrode active material (for a lithium secondary battery) of the present invention as a positive electrode active material of a lithium secondary battery, and a lithium secondary battery including this positive electrode, while describing the structure of a lithium secondary battery.

In one example of the lithium secondary battery of the present embodiment, the lithium secondary battery includes a positive electrode, a negative electrode, a separator interposed between the positive electrode and the negative electrode, and an electrolytic solution disposed between the positive electrode and the negative electrode.

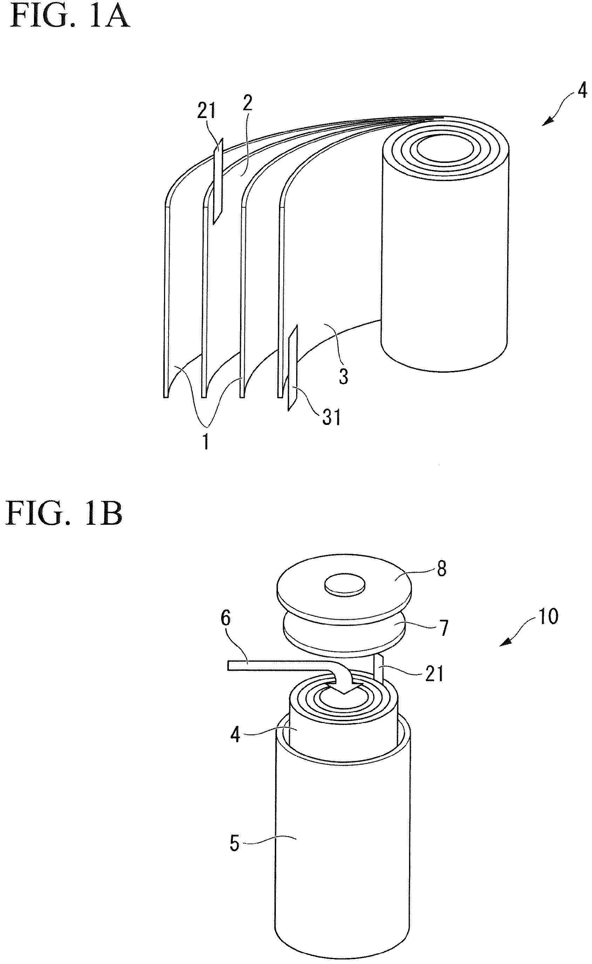

Each of FIG. 1A and FIG. 1B is a schematic view illustrating an example of the lithium secondary battery of the present embodiment. A cylindrical lithium secondary battery 10 of the present embodiment is manufactured as described below.

First, as illustrated in FIG. 1A, a pair of strip-shaped separators 1, a strip-shaped positive electrode 2 having a positive electrode lead 21 at one end, and a strip-shaped negative electrode 3 having a negative electrode lead 31 at one end are laminated in an order of the separator 1, the positive electrode 2, the separator 1, and the negative electrode 3, and are wound into an electrode group 4.

Next, as illustrated in FIG. 1B, the electrode group 4 and an insulator (not shown) are put in a battery can 5, followed by sealing the bottom of the can, and then an electrolytic solution 6 is impregnated into the electrode group 4 such that an electrolyte is disposed between the positive electrode 2 and the negative electrode 3. Further, the top section of the battery can 5 is sealed using a top insulator 7 and a sealing body 8, whereby the lithium secondary battery 10 can be obtained.

The shape of the electrode group 4 may be, for example, of a columnar shape with its cross-section being round, oval, rectangular, or of a round-cornered rectangular shape, wherein the cross-section is perpendicular to the axis of winding of the electrode group 4.

As the shape of the lithium secondary battery including the aforementioned electrode group 4, it is possible to employ the shapes prescribed by IEC60086, which is the standard of batteries prescribed by the International Electrotechnical Commission (IEC), or JIS C 8500. Examples thereof include a cylindrical shape, an angular shape, etc.

The lithium secondary battery is not limited to the wound construction as described above, and may have a laminated construction obtained by laminating a positive electrode, a separator, a negative electrode, a separator, and so forth. Examples of the laminated lithium secondary battery include the so-called coin-type battery, button-type battery, and paper-type (or sheet-type) battery.

Hereinafter, the respective components will be described.

(Positive Electrode)

The positive electrode of the present embodiment can be manufactured by, first, preparing a positive electrode mix including the aforementioned positive electrode active material, a conductive material and a binder, and causing the positive electrode mix to be supported on a positive electrode current collector.

(Conductive Material)

As the conductive material included in the positive electrode active material of the present embodiment, a carbonaceous material can be used. Examples of the carbonaceous material include a graphite powder, a carbon black (such as acetylene black) and a fibrous carbonaceous material. Since carbon black is a microparticle and has a large surface area, the addition of only a small amount of the carbon black to the positive electrode mix increases the conductivity within the positive electrode, and improves the charge/discharge efficiency and the output performance as well; however, too large an amount of carbon black deteriorates the binding strength of the binder exerted not only between the positive electrode mix and the positive electrode current collector but also within the positive electrode mix, resulting in an adverse factor that increases an internal resistance.

The amount of the conductive material in the positive electrode mix is preferably 5 parts by mass or more and 20 parts by mass or less, relative to 100 parts by mass of the positive electrode active material. This amount may be decreased when using a fibrous carbonaceous material such as a graphitized carbon fiber or a carbon nanotube as the conductive material.

(Binder)

As the binder included in the positive electrode active material of the present embodiment, a thermoplastic resin can be used. Examples of the thermoplastic resin include fluororesins such as polyvinylidene fluoride (hereinafter also referred to as PVdF), polytetrafluoroethylene (hereinafter also referred to as PTFE), ethylene tetrafluoride-propylene hexafluoride-vinylidene fluoride type copolymers, propylene hexafluoride-vinylidene fluoride type copolymers, and ethylene tetrafluoride-perfluorovinyl ether type copolymers; and polyolefin resins such as polyethylene and polypropylene.

Two or more of these thermoplastic resins may be used in the form of a mixture thereof. When a fluororesin and a polyolefin resin are used as the binder, it is possible to obtain a positive electrode mix capable of strong adhesive force relative to the positive electrode current collector as well as strong biding force within the positive electrode mix in itself by adjusting the ratio of the fluororesin to fall within the range of from 1 % by mass to 10 % by mass, and the ratio of the polyolefin resin to fall within the range of from 0.1 % by mass to 2 % by mass, based on the total mass of the positive electrode mix.

(Positive Electrode Current Collector)

As the positive electrode current collector included in the positive electrode active material of the present embodiment, it is possible to use a strip-shaped member composed of a metal material such as Al, Ni, or stainless steel as a component material. It is especially preferred to use a current collector which is made of Al and is shaped into a thin film because of its high processability and low cost.

Examples of the method for causing the positive electrode mix to be supported on the positive electrode current collector include a method in which the positive electrode mix is press-formed on the positive electrode current collector. Alternatively, the positive electrode mix may be caused to be supported on the positive electrode current collector by a method including producing a paste from the positive electrode mix using an organic solvent, applying the obtained paste of the positive electrode mix to at least one surface of the positive electrode current collector, drying the paste, and press-bonding the resultant to the current collector.

Examples of the organic solvent that can be used for producing the paste from the positive electrode mix include amine-based solvents such as N,N-dimethylaminopropylamine and diethylene triamine; ether-based solvents such as tetrahydrofuran; ketone-based solvents such as methyl ethyl ketone; ester-based solvents such as methyl acetate; and amide-based solvents such as dimethyl acetamide, and N-methyl-2-pyrrolidone (hereinafter, sometimes also referred to as "NMP").

Examples of the method for applying the paste of the positive electrode mix to the positive electrode current collector include a slit die coating method, a screen coating method, a curtain coating method, a knife coating method, a gravure coating method, and an electrostatic spray method.

The positive electrode can be produced by the method as described above.

(Negative Electrode)

The negative electrode included in the lithium secondary battery of the present embodiment is not particularly limited as long as it is capable of doping and de-doping lithium ions at a potential lower than the positive electrode, and examples thereof include an electrode comprising a negative electrode current collector having supported thereon a negative electrode mix including a negative electrode active material, and an electrode constituted solely of a negative electrode active material.

(Negative Electrode Active Material)

Examples of the negative electrode active material included in the negative electrode include materials which are carbonaceous materials, chalcogen compounds (oxides, sulfides, etc.), nitrides, metals or alloys, and allow lithium ions to be doped or dedoped at a potential lower than the positive electrode.

Examples of the carbonaceous materials that can be used as the negative electrode active material include graphite such as natural graphite and artificial graphite, cokes, carbon black, pyrolytic carbons, carbon fibers, and organic macromolecular compound-sintered bodies.

Examples of oxides that can be used as the negative electrode active material include oxides of silicon represented by the formula: $SiO_x$ (wherein x is an positive integer) such as $SiO_2$ and SiO; oxides of titanium represented by the formula : $TiO_x$ (wherein x is an positive integer) such as $TiO_2$ and TiO; oxides of vanadium represented by the formula: $VO_x$ (wherein x is an positive integer) such as $V_2O_5$ and $VO_2$; oxides of iron represented by the formula: $FeO_x$ (wherein x is an positive integer) such as $Fe_3O_4$, $Fe_2O_3$ and FeO; oxides of tin represented by the formula: $SnO_x$ (wherein

x is an positive integer) such as $SnO_2$ and SnO; oxides of tungsten represented by the formula: $WO_x$ (wherein x is an positive integer) such as $WO_3$ and $WO_2$; and metal composite oxides containing lithium and titanium or vanadium such as $Li_4Ti_5O_{12}$ and $LiVO_2$.

Examples of sulfides that can be used as the negative electrode active material include sulfides of titanium represented by the formula: $TiS_x$(wherein x is an positive integer) such as $Ti_2S_3$, $TiS_2$ and TiS; sulfides of vanadium represented by the formula: $VS_x$(wherein x is an positive integer) such as $V_3S_4$, $VS_2$, and VS; sulfides of iron represented by the formula: $FeS_x$(wherein x is an positive integer) such as $Fe_3S_4$, $FeS_2$ and FeS; sulfides of molebdenum represented by the formula: $MoS_x$ (wherein x is an positive integer) such as $Mo_2S_3$ and $MoS_2$; sulfides of tin represented by the formula: $SnS_x$(wherein x is an positive integer) such as $SnS_2$ and SnS; sulfides of tungsten represented by the formula: $WS_x$ (wherein x is an positive integer) such as $WS_2$; sulfides of antimony represented by the formula: $SbS_x$ (wherein x is an positive integer) such as Sb2S3; and sulfides of selenium represented by formula: $SeS_x$ (wherein x is an positive integer) such as $Se_5S_3$, $SeS_2$ and SeS.

Examples of nitrides that can be used as the negative electrode active material include lithium-containing nitrides such as $Li_3N$ and $Li_{3-x}A_xN$ (wherein A is one or both of Ni and Co, and $0 < x < 3$).

Each of the aforementioned carbonaceous materials, oxides, sulfides and nitrides may be used alone or in combination. Further, each of the aforementioned carbonaceous materials, oxides, sulfides and nitrides may be crystalline or amorphous.

Examples of metals that can be used as the negative electrode active material include lithium metals, silicon metals, tin metals, etc.

Examples of alloys that can be used as the negative electrode active material include lithium alloys such as Li-Al, Li-Ni, Li-Si, Li-Sn, and Li-Sn-Ni; silicon alloys such as Si-Zn; tin alloys such as Sn-Mn, Sn-Co, Sn-Ni, Sn-Cu, and Sn-La; and alloys such as $Cu_2Sb$ and $La_3Ni_2Sn_7$.

The metals or alloys are processed into, for example, a foil, and are in many cases used alone as an electrode.

Among the aforementioned negative electrode materials, carbonaceous materials composed mainly of graphite such as natural graphite or artificial graphite are preferably used for the following reasons: the potential of the negative electrode hardly changes during charging from a uncharged state to a fully charged state (the potential flatness is favorable), the average discharge potential is low, the capacity retention after repeated charge/discharge cycles is high (the cycle performance is favorable), etc. Examples of the shape of the carbonaceous material include a flake shape as in the case of natural graphite, a spherical shape as in the case of mesocarbon microbeads, a fibrous shape as in the case of a graphitized carbon fiber, an agglomerate of fine powder, etc., and the carbonaceous material may have any of these shapes.

The negative electrode mix may include a binder as necessary. As the binder, a thermoplastic resin can be used, and examples thereof include PVdF, thermoplastic polyimides, carboxymethyl cellulose, polyethylene, and polypropylene.

(Negative Electrode Current Collector)

Examples of the negative electrode current collector included in the negative electrode include a strip-shaped member composed of a metal material such as Cu, Ni or stainless steel as a component material. Among these, it is preferred to use a current collector which is made of Cu and is shaped into a thin film, since Cu is unlikely to form an alloy with lithium and can be easily processed.

Examples of the method for causing the negative electrode mix to be supported on the above-described negative electrode current collector include, as in the case of the positive electrode, a press forming method, and a method in which a paste of the negative electrode mix obtained by using a solvent etc., is applied to and dried on the negative electrode current collector, and the resulting is press bonded to the current collector.

(Separator)

As the separator used in the lithium secondary battery of the present embodiment, for example, it is possible to use one that is formed of a material such as a polyolefin resin (e.g., polyethylene or polypropylene), a fluororesin or a nitrogen-containing aromatic polymer, and has a form of a porous film, a nonwoven fabric, a woven fabric or the like. The separator may be composed of two or more of the materials mentioned above, or may be formed by laminating these materials.

In the present embodiment, for satisfactory permeation of the electrolyte through the separator during the use (charge and discharge) of the battery, the separator preferably has an air resistance of 50 sec/100 cc or more and 300 sec/100 cc or less, more preferably 50 sec/100 cc or more and 200 sec/100 cc or less, as measured by the Gurley method prescribed in JIS P 8117: 2009.

The porosity of the separator is preferably 30 % by volume or more and 80 % by volume or less, and more preferably 40 % by volume or more and 70 % by volume or less. The separator may be a laminate of separators having different porosities.

(Electrolytic Solution)

The electrolytic solution used in the lithium secondary battery of the present embodiment contains an electrolyte and an organic solvent.

Examples of the electrolyte contained in the electrolytic solution include lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB(wherein "BOB" means bis(oxalato)borate), LiFSI(wherein FSI means bis(fluorosulfonyl)imide), a lithium salt of a lower aliphatic carboxylic acid, and $LiAlCl_4$. Two or more of these salts may be used in the form of a mixture thereof. Among these electrolytes, it is preferred to use at least one fluorine-containing salt selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$.

As the organic solvent included in the electrolyte, it is possible to use, for example, a carbonate such as propylene carbonate, ethylene carbonate, dimethyl carbonate, diethyl carbonate, ethyl methyl carbonate, 4-trifluoromethyl-1,3-dioxolane-2-one, and 1,2-di(methoxycarbonyloxy)ethane; an ether such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyl tetrahydrofuran; an ester such as methyl formate, methyl acetate, and y-butyrolactone; a nitrile such as acetonitrile and butyronitrile; an amide such as N,N-dimethyl formamide and N,N-dimethylacetoamide; a carbamate such as 3-methyl-2-oxazolidone; a sulfur-containing compound such as sulfolane, dimethyl sulfoxide, and 1,3-propane sultone; or a solvent produced by further introducing a fluoro group into the above-described organic solvent (a solvent in which one or more hydrogen atoms included in the organic solvent is substituted by a fluorine atom).

As the organic solvent, it is preferable to use a mixture of two or more of these organic solvents. Among the aforementioned organic solvents, a solvent mixture including a carbonate is preferable, and a solvent mixture of a cyclic carbonate and a non-cyclic carbonate and a solvent mixture of a cyclic carbonate and ether are more preferable. As the solvent mixture of a cyclic carbonate and a non-cyclic carbonate, a solvent mixture including ethylene carbonate, dimethyl carbonate, and ethyl methyl carbonate is preferable. An electrolytic solution using the aforementioned solvent mixture has many advantages such as a wider operational temperature range, a low tendency of deterioration even after charge/discharge at a high current rate, a low tendency of deterioration even when used for a long period of time, and a low decomposability even when a graphite material such as natural graphite or artificial graphite is used as the active material for the negative electrode.

For improving the safety of the obtained lithium secondary battery, it is preferable to use an electrolytic solution including a lithium compound containing fluorine such as $LiPF_6$ and an organic solvent having a fluorine substituent. A solvent mixture including ether having a fluorine substituent such as pentafluoropropyl methyl ether or 2,2,3,3-tetrafluoropropyl difluoromethyl ether and dimethyl carbonate is more preferable since a high capacity retention is achievable even when the battery is charged and discharged at a high current rate.

A solid electrolyte may be used instead of the aforementioned electrolytic solution. As the solid electrolyte, it is possible to use, for example, an organic polymer electrolyte such as a polyethylene oxide-type polymeric compound or a polymeric compound including at least one type of polymer chain selected from a polyorganosiloxane chain or a polyoxyalkylene chain. It is also possible to use the so-called gel-type electrolyte including a polymer retaining therein a non-aqueous electrolytic solution. Further, it is also possible to use an inorganic solid electrolyte including a sulfide such as $Li_2S-SiS_2$, $Li_2S-GeS_2$, $Li_2S-P_2S_5$, $Li_2S-B_2S_3$, $Li_2S-SiS_2-Li_3PO_4$, $Li_2S-SiS_2-Li_2SO_4$, and $Li_2S-GeS_2-P_2S_5$. In some cases, the use of such a solid electrolyte may further improve the safety of the lithium secondary battery.

In the lithium secondary battery of the present embodiment, the solid electrolyte, when used, may serve as a separator. In such a case, the separator may be omitted.

The positive electrode active material having features as described above contains the lithium metal composite oxide of the present embodiment described above, whereby the positive electrode active material allows a lithium secondary battery using the positive electrode to enjoy a longer battery life.

The positive electrode having features as described above uses the positive electrode active material of the present embodiment as described above, whereby the positive electrode allows a lithium secondary battery using the positive electrode to enjoy a longer battery life.

Furthermore, the lithium secondary battery having features as described above has the aforementioned positive electrode, and hence has a longer battery life than the conventional lithium secondary batteries.

Examples

Hereinbelow, the present invention will be described in more detail with reference to the Examples.

In the present Examples, evaluations of the produced positive electrode active material for a lithium secondary battery, positive electrode for a lithium secondary battery and lithium secondary battery were implemented as follows.

(1) Evaluation of Positive Electrode Active Material for Lithium Secondary Battery 1. Average Crushing Strength of Secondary Particles

The measurement of the average crushing strength of secondary particles was carried out by using a micro compression tester (MCT-510, manufactured by Shimadzu Corporation) and applying a test pressure to one secondary particle arbitrarily selected from the lithium metal composite oxide powder. A pressure value at which the deformation amount of the secondary particles was maximized while the test pressure remained almost constant was determined as test force (P). The secondary particle diameter (d) was measured using an optical microscope attached to the micro compression tester, and the crushing strength (St) was calculated according to the above-mentioned Hiramatsu et al's equation. Ultimately, the average crushing strength was determined as an average of the values obtained by performing the crushing strength test five times in total.

2. Measurement of BET Specific Surface Area

The BET specific surface area was measured using Macsorb (registered trademark) manufactured by Mountech Co.,Ltd. after 1 g of the positive electrode active material for a lithium secondary battery was dried at 105 °C in a nitrogen atmosphere for 30 minutes.

3. Measurement of Average Particle Diameter

The measurement of average particle diameter was performed using a laser diffraction particle size analyzer (LA-950, manufactured by Horiba, Ltd.) with respect to a dispersion obtained by charging 0.1 g of the positive electrode active material for a lithium secondary battery into 50 ml of a 0.2 % by mass aqueous sodium hexametaphosphate solution so as to disperse the positive electrode active material in the solution. The dispersion was subjected to a particle size distribution measurement, whereby the volume-based particle size distribution was determined. From the obtained cumulative particle size distribution curve, the particle diameter (D50) at a 50% cumulation measured from the smaller particle side was determined as the average particle diameter of the positive electrode active material for a lithium secondary battery.

4. Powder X-ray Diffraction Measurement

The powder X-ray diffraction analysis was carried out using an X-ray diffractometer (X'Pert PRO, manufactured by PANalytical). The positive electrode active material for a lithium secondary battery was charged onto a specially designed substrate, and the measurement was carried out using a Cu-K$\alpha$ radiation source with a diffraction angle in the range of $2\theta = 10°$ to $90 °$, thereby obtaining a powder X-ray diffraction pattern. From the powder X-ray diffraction pattern, the half width A of a diffraction peak at $2\theta = 18.7 \pm 1 °$ and the half width B of a diffraction peak at $2\theta = 44.4 \pm 1 °$ were determined using a comprehensive powder X-ray diffraction pattern analyzing software JADE5.
Diffraction peak for half width A: $2\theta = 18.7 \pm 1°$
Diffraction peak for half width B: $2\theta = 44.4 \pm 1°$

5. Composition analysis

The composition analysis of the positive electrode active material (for a lithium secondary battery) manufactured by the method described below was carried out using an inductively coupled plasma emission spectrometer (SPS3000, manufactured by SII Nano Technology Inc.) after the positive electrode active material was dissolved in hydrochloric acid. From the amount of lithium obtained above, the amount of lithium derived from lithium carbonate and lithium hydroxide measured by the method described below was subtracted to determine the composition of the lithium metal oxide powder.

6. Determination of Residual Lithium Content of Positive Electrode Active Material for Lithium Secondary Battery (neutralization titration)

20 g of the positive electrode active material for a lithium secondary battery and 100 g of pure water were placed in a 100 ml beaker and stirred for 5 minutes. After stirring, the positive electrode active material for a lithium secondary battery was filtered, 0.1 mol/L hydrochloric acid was added dropwise to 60 g of the remaining filtrate, and the pH of the filtrate was measured with a pH meter. By the equation described below, the concentrations of lithium carbonate and lithium hydroxide remaining in the positive electrode active material for a lithium secondary battery were calculated with the titration amount of hydrochloric acid at pH = 8.3 ± 0.1 as C ml and the titration amount of hydrochloric acid at pH = 4.5 ± 0.1 as D ml. In the equation below, the molecular weights of lithium carbonate and lithium hydroxide were calculated supposing the following atomic weights for the respective atoms: H = 1.000, Li = 6.941, C = 12, O = 16.

Lithium carbonate concentration (%) = 0.1 × (D - C) / 1000 × 73.882 / (20 × 60/100) × 100

$$\text{Lithium hydroxide concentration } (\%) = \ 0.1 \times (2C - D) / 1{,}000 \times 23.941 / (20 \times 60/100)$$

$$\times 100$$

(2) Production of Positive Electrode for Lithium Secondary Battery

A positive electrode active material obtained by the production method described below, a conductive material (acetylene black), and a binder (PVdF) were mixed and kneaded so as to obtain a composition wherein positive electrode active material : conductive material : binder = 92 : 5 : 3 (mass ratio), thereby preparing a paste-like positive electrode mix. In preparation of the positive electrode mix, N-methyl-2-pyrrolidone was used as an organic solvent.

The obtained positive electrode mix was applied to a 40 μm-thick Al foil which served as a current collector, and was dried in vacuo at 150 °C for eight hours, thereby obtaining a positive electrode for a lithium secondary battery. The electrode area of the positive electrode for a lithium secondary battery was set to 1.65 cm$^2$.

(3) Production of Positive Electrode for Lithium Secondary Battery

Next, artificial graphite (MAGD, manufactured by Hitachi Chemical Co., Ltd.) as a negative electrode active material, CMC (manufactured by Daiichi Kogyo Co., Ltd.) and SBR (manufactured by Nippon A & L Inc.) as binders were mixed such that negative electrode active material : CMC : SBR = 98 : 1 : 1 (mass ratio), and the resulting was kneaded to prepare a paste-like negative electrode mix. In preparation of the negative electrode mix, an ion exchanged water was used as a solvent.

The obtained negative electrode mix was applied to a 12 μm-thick Cu foil which served as a current collector, and was dried in vacuo at 100 °C for eight hours, thereby obtaining a negative electrode for a lithium secondary battery. The electrode area of the negative electrode for a lithium secondary battery was set to 1.77 cm$^2$.

(4) Production of Lithium Secondary Battery (Coin-type Half Cell)

The following operations were carried out in an argon atmosphere within a glove box.

The positive electrode produced in the "(2) Production of Positive Electrode for Lithium Secondary Battery" was placed on a bottom lid of a coin cell for a coin-type battery R2032 (manufactured by Hohsen Corporation) with the aluminum foil surface facing downward, and a laminate film separator (a separator including a heat-resistant porous layer laminated on a polyethylene porous film (thickness: 16 μm)) was placed on the positive electrode. 300 μl of an electrolytic solution was injected thereinto. The electrolytic solution used was prepared by dissolving 1 mol/l of LiPF$_6$ in a liquid mixture of ethylene carbonate (hereinafter also referred to as "EC"), dimethyl carbonate (hereinafter also referred to as "DMC"), and ethyl methyl carbonate (hereinafter also referred to as "EMC") at a volume ratio of 30:35:35. Hereinafter, the electrolytic solution may also be referred to as "LiPF$_6$/EC+DMC+EMC".

Next, metal lithium used as a negative electrode was placed on a laminate film separator, covered with a top lid through a gasket, and swaged using a swage, thereby producing a lithium secondary battery (coin-type half cell R2032). Hereinafter, this battery may also be referred to as "coin-type half cell".

(5) Production of Lithium Secondary Battery (Coin-type Full Cell)

The following operations were carried out in an argon atmosphere within a glove box.

The positive electrode produced in the "(2) Production of Positive Electrode for Lithium Secondary Battery" was placed on a bottom lid of a coin cell for a coin-type battery R2032 (manufactured by Hohsen Corporation) with the aluminum foil surface facing downward, and a laminate film separator (a separator including a heat-resistant porous layer laminated on a polyethylene porous film (thickness: 16 μm)) was placed on the positive electrode. 300 μl of an electrolytic solution was injected thereinto. The electrolytic solution used was prepared by dissolving 1 mol/l of LiPF$_6$ in a liquid mixture of ethylene carbonate (hereinafter also referred to as "EC"), dimethyl carbonate (hereinafter also referred to as "DMC"), and ethyl methyl carbonate (hereinafter also referred to as "EMC") at a volume ratio of 30:35:35. Hereinafter, the electrolytic solution may also be referred to as "LiPF$_6$/EC+DMC+EMC".

Next, the negative electrode produced in the above "(3) Production of Positive Electrode for Lithium Secondary Battery" was placed on the laminate film separator, covered with a top lid through a gasket, and swaged using a swage, thereby producing a lithium secondary battery (coin-type full cell R2032). Hereinafter, this battery may also be referred to as "full cell".

(6) Initial Charge/Discharge Test

An initial charge/discharge test was carried out under conditions described below using the half cell produced in the above "(4) Production of Lithium Secondary Battery (Coin-type Half Cell)".

<Initial Charge/Discharge Test>

Test temperature: 25° C.
Constant current/constant voltage charging : maximum charge voltage of 4.3V, charge time of 6 hours, and charge current of 0.2CA.
Constant Current Discharging : minimum discharge voltage of 2.5V, discharge time of 5 hours, and discharge current of 0.2 CA.
The initial charge/discharge efficiency was determined as follows.

$$\text{Initial charge/discharge efficiency } (\%) = \text{initial discharge capacity at } 0.2 \text{ CA/initial charge}$$

$$\text{capacity at } 0.2 \text{ CA} \times 100$$

(7) Low Temperature Discharge Test

An initial charge/discharge test was carried out under conditions described below using the full cell produced in the above "(5) Production of Lithium Secondary Battery (Coin-type Full Cell)".

<Charge/Discharge Conditions>

Test temperature: 25 °C.
Constant current/constant voltage charging : maximum charge voltage of 4.2 V, charge time of 6 hours, and charge current of 0.2CA.
Constant Current Discharging : minimum discharge voltage of 2.7 V, discharge time of 5 hours, and discharge current of 0.2 CA.

<Measurement of Battery Resistance>

Assuming that the discharge capacity measured above corresponds to 100 % charge depth (hereinafter also referred to as SOC), battery resistances at 15 % SOC and 50 % SOC were measured at -15 °C. The adjustment to each SOC was carried out in an environment of 25 °C. For the measurement of battery resistance, a full cell with its SOC adjusted was allowed to stand in a thermostatic chamber at -15 °C for 2 hours, and subjected to the following procedures in this sequence: discharge at 20 $\mu$A for 15 seconds, standing for 5 minutes, charge at 20 $\mu$A for 15 seconds, standing for 5 minutes, discharge at 40 $\mu$A for 15 seconds, standing for 5 minutes, charge at 20 $\mu$A for 30 seconds, standing for 5 minutes, discharge at 80 $\mu$A for 15 seconds, stand for 5 minutes, charge at 20 $\mu$A for 60 seconds, standing for 5 minutes, discharge at 160 $\mu$A for 15 seconds, standing for 5 minutes, charge at 20 $\mu$A for 120 seconds, and standing for 5 minutes. From the plots of battery voltage values versus current values measured 10 seconds after discharge at 20, 40, 80, and 120 $\mu$A, the slope was calculated using the least square approximation method, and this slope was taken as the battery resistance.

(Example 1)

1. Production of Positive Electrode Active Material 1 for Lithium Secondary Battery

Into a reaction vessel equipped with a stirrer and an overflow pipe was charged water, followed by addition of an aqueous sodium hydroxide solution. The temperature of the resulting liquid was maintained at 50°C.
An aqueous nickel sulfate solution, an aqueous cobalt sulfate solution and an aqueous manganese sulfate solution were mixed together such that the atomic ratio between nickel atoms, cobalt atoms and manganese atoms became 0.315 : 0.330 : 0.355, to thereby prepare a raw material mixture solution.

Then, the obtained raw material mixture solution and an aqueous ammonium sulfate solution as a complexing agent were continuously added to the reaction vessel with stirring, and an oxygen-containing gas obtained by mixing air into nitrogen gas so that the oxygen concentration became 4.0 % was continuously passed through the reaction vessel. An aqueous solution of sodium hydroxide was dropwise added to the reaction vessel at an appropriate timing such that the pH of the solution in the reaction vessel became 11.7, thereby obtaining nickel-cobalt-manganese composite hydroxide particles. The obtained particles were washed, dehydrated by a centrifugal separator, washed, dehydrated, separated and dried at 105 °C to obtain a nickel-cobalt-manganese composite hydroxide 1.

The nickel-cobalt-manganese composite hydroxide 1 and a lithium carbonate powder were weighed such that Li/(Ni + Co + Mn) = 1.13, followed by mixing. The resulting was calcined in ambient atmosphere at 690 °C for 5 hours, followed by further calcination in ambient atmosphere at 925 °C for 6 hours, thereby obtaining a positive electrode active material 1 for a lithium secondary battery.

2. Evaluation of Positive Electrode Active Material 1 for Lithium Secondary Battery

The composition analysis of the obtained positive electrode active material 1 for a lithium secondary battery was performed and the results were applied to the formula (1). As a result, it was found that x = 0.06, y = 0.328, z = 0.356, and w = 0.

With respect to the obtained positive electrode active material 1 for a lithium secondary battery, the average crushing strength was 52.2 MPa, the BET specific surface area was 2.4 $m^2$/g, the average particle diameter $D_{50}$ was 3.4 $\mu$m, the value of A x B, which is the product of half width A at $2\theta$ = 18.7 $\pm$ 1 ° and half width B at $2\theta$ = 44.4 $\pm$ 1 °, is 0.020, the half width A was 0.134, and the half width B was 0.147.

The determination of the residual lithium content of the positive electrode active material 1 for a lithium secondary battery revealed that the amount of lithium carbonate was 0.10 % by mass and the amount of lithium hydroxide was 0.11 % by mass.

3. Evaluation of Lithium Secondary Battery

A coin-type half cell was produced using the positive electrode active material 1 for a lithium secondary battery, and an initial charge/discharge test was carried out. As a result, the initial charge capacity, the initial discharge capacity and the initial charge/discharge efficiency were respectively 170.4 mAh/g, 161.1 mAh/g and 94.5 %.

A coin-type full cell was produced using the positive electrode active material 1 for a lithium secondary battery, and a low temperature discharge test was carried out at-15 °C. The DC resistances at SOC 15 % and SOC 50 % were 423 $\Omega$ and 384 $\Omega$, respectively.

(Example 2)

1. Production of Positive Electrode Active Material 2 for Lithium Secondary Battery

A nickel-cobalt-manganese composite hydroxide 1 was produced following the same procedure as in Example 1.

An LiOH aqueous solution in which $WO_3$ was dissolved at 61g/L was prepared. The prepared W-dissolved LiOH aqueous solution was applied to the nickel-cobalt-manganese composite hydroxide 1 such that W/(Ni + Co + Mn + W) = 0.005 by a Loedige mixer. The nickel-cobalt-manganese composite hydroxide 1 with W adhering thereto and a lithium carbonate powder were weighed such that Li/(Ni + Co + Mn + W) = 1.13, followed by mixing. The resulting was calcined in ambient atmosphere at 690 °C for 5 hours, followed by further calcination in ambient atmosphere at 925 °C for 6 hours, thereby obtaining a positive electrode active material 2 for a lithium secondary battery.

2. Evaluation of Positive Electrode Active Material 2 for Lithium Secondary Battery

The composition analysis of the obtained positive electrode active material 2 for a lithium secondary battery was performed and the results were applied to the formula (1). As a result, it was found that M was W, x = 0.06, y = 0.327, z = 0.354, and w = 0.005.

With respect to the obtained positive electrode active material 1 for a lithium secondary battery, the average crushing strength was 54.0 MPa, the BET specific surface area was 2.0 $m^2$/g, the average particle diameter $D_{50}$ was 3.6 $\mu$m, the value of A $\times$ B, which is the product of half width A at $2\theta$ = 18.7 $\pm$ 1 ° and half width B at $2\theta$ = 44.4 $\pm$ 1 °, is 0.023, the half width A was 0.141, and the half width B was 0.161.

The determination of the residual lithium content of the positive electrode active material 2 for a lithium secondary battery revealed that the amount of lithium carbonate was 0.17 % by mass and the amount of lithium hydroxide was 0.11 % by mass.

3. Evaluation of Lithium Secondary Battery

A coin-type half cell was produced using the positive electrode active material 2 for a lithium secondary battery, and an initial charge/discharge test was carried out. As a result, the initial charge capacity, the initial discharge capacity and the initial charge/discharge efficiency were respectively 170.6 mAh/g, 161.2 mAh/g and 94.5 %.

A coin-type full cell was produced using the positive electrode active material 2 for a lithium secondary battery, and a low temperature discharge test was carried out at-15 °C. The DC resistances at SOC 15 % and SOC 50 % were 296 $\Omega$ and 269 $\Omega$, respectively.

(Example 3)

1. Production of Positive Electrode Active Material 3 for Lithium Secondary Battery

A nickel-cobalt-manganese composite hydroxide 1 was produced following the same procedure as in Example 1.

$ZrO_2$ was added to the nickel-cobalt-manganese composite hydroxide 1 such that Zr/(Ni + Co + Mn + Zr) = 0.003, followed by mixing to obtain a $ZrO_2$-containing mixed powder. The obtained powder and a lithium carbonate powder were weighed such that Li/(Ni + Co + Mn + Zr) = 1.13, followed by mixing. The resulting was calcined in ambient atmosphere at 690 °C for 5 hours, followed by further calcination in ambient atmosphere at 925 °C for 6 hours, thereby obtaining a positive electrode active material 3 for a lithium secondary battery.

2. Evaluation of Positive Electrode Active Material 3 for Lithium Secondary Battery

The composition analysis of the obtained positive electrode active material 3 for a lithium secondary battery was performed and the results were applied to the formula (1). As a result, it was found that M was Zr, x = 0.06, y = 0.328, z = 0.354, and w = 0.003.

With respect to the obtained positive electrode active material 3 for a lithium secondary battery, the average crushing strength was 57.6 MPa, the BET specific surface area was 2.4 $m^2$/g, the average particle diameter $D_{50}$ was 3.5 $\mu$m, the value of A $\times$ B, which is the product of half width A at $2\theta$ = 18.7 $\pm$ 1 ° and half width B at $2\theta$ = 44.4 $\pm$ 1 °, is 0.021, the half width A was 0.133, and the half width B was 0.161.

The determination of the residual lithium content of the positive electrode active material 3 for a lithium secondary battery revealed that the amount of lithium carbonate was 0.15 % by mass and the amount of lithium hydroxide was 0.12 % by mass.

3. Evaluation of Lithium Secondary Battery

A coin-type half cell was produced using the positive electrode active material 3 for a lithium secondary battery, and an initial charge/discharge test was carried out. As a result, the initial charge capacity, the initial discharge capacity and the initial charge/discharge efficiency were respectively 170.5 mAh/g, 160.2 mAh/g and 94.0 %.

A coin-type full cell was produced using the positive electrode active material 3 for a lithium secondary battery, and a low temperature discharge test was carried out at-15 °C. The DC resistances at SOC 15 % and SOC 50 % were 298 $\Omega$ and 271 $\Omega$, respectively.

(Example 4)

1. Production of Positive Electrode Active Material 4 for Lithium Secondary Battery

A nickel-cobalt-manganese composite hydroxide 2 was produced following the same procedure as in Example 1 except that the oxygen concentration was adjusted to 2.1 % and the pH of the solution in the reaction vessel was adjusted to 11.2.

MgO was added to the nickel-cobalt-manganese composite hydroxide 2 such that Mg/(Ni + Co + Mn + Mg) = 0.003, followed by mixing to obtain a MgO-containing mixed powder. The obtained powder and a lithium carbonate powder were weighed such that Li/(Ni + Co + Mn + Mg) = 1.08, followed by mixing. The resulting was calcined in ambient atmosphere at 690 °C for 5 hours, followed by further calcination in ambient atmosphere at 950 °C for 6 hours, thereby obtaining a positive electrode active material 4 for a lithium secondary battery.

2. Evaluation of Positive Electrode Active Material 4 for Lithium Secondary Battery

The composition analysis of the obtained positive electrode active material 4 for a lithium secondary battery was performed and the results were applied to the formula (1). As a result, it was found that M was Mg, x = 0.04, y = 0.328, z = 0.355, and w = 0.003.

With respect to the obtained positive electrode active material 4 for a lithium secondary battery, the average crushing strength was 92.6 MPa, the BET specific surface area was 1.1 $m^2$/g, the average particle diameter $D_{50}$ was 9.8 $\mu$m, the value of A $\times$ B, which is the product of half width A at $2\theta$ = 18.7 $\pm$ 1 ° and half width B at $2\theta$ = 44.4 $\pm$ 1 °, is 0.019, the half width A was 0.133, and the half width B was 0.142.

The determination of the residual lithium content of the positive electrode active material 4 for a lithium secondary battery revealed that the amount of lithium carbonate was 0.04 % by mass and the amount of lithium hydroxide was 0.10 % by mass.

3. Evaluation of Lithium Secondary Battery

A coin-type half cell was produced using the positive electrode active material 4 for a lithium secondary battery, and an initial charge/discharge test was carried out. As a result, the initial charge capacity, the initial discharge capacity and the initial charge/discharge efficiency were respectively 173.4 mAh/g, 157.1 mAh/g and 90.6 %.

A coin-type full cell was produced using the positive electrode active material 4 for a lithium secondary battery, and a low temperature discharge test was carried out at-15 °C. The DC resistances at SOC 15 % and SOC 50 % were 480 $\Omega$ and 332 $\Omega$, respectively.

(Example 5)

1. Production of Positive Electrode Active Material 5 for Lithium Secondary Battery

Into a reaction vessel equipped with a stirrer and an overflow pipe was charged water, followed by addition of an aqueous sodium hydroxide solution. The temperature of the resulting liquid was maintained at 50°C.

An aqueous nickel sulfate solution, an aqueous cobalt sulfate solution and an aqueous manganese sulfate solution were mixed together such that the atomic ratio between nickel atoms, cobalt atoms and manganese atoms became 0.510:0.225:0.265, to thereby prepare a raw material mixture solution.

Then, the obtained raw material mixture solution and an aqueous ammonium sulfate solution as a complexing agent were continuously added to the reaction vessel with stirring, and an oxygen-containing gas obtained by mixing air into nitrogen gas so that the oxygen concentration became 8.3 % was continuously passed through the reaction vessel. An aqueous solution of sodium hydroxide was dropwise added to the reaction vessel at an appropriate timing such that the pH of the solution in the reaction vessel became 12.2, thereby obtaining nickel-cobalt-manganese composite hydroxide particles. The obtained particles were washed, dehydrated by a centrifugal separator, washed, dehydrated, separated and dried at 105 °C to obtain a nickel-cobalt-manganese composite hydroxide 3.

The nickel-cobalt-manganese composite hydroxide 3 and a lithium carbonate powder were weighed such that Li/(Ni + Co + Mn) = 1.06, followed by mixing. The resulting was calcined in ambient atmosphere at 720 °C for 3 hours, followed by further calcination in ambient atmosphere at 875 °C for 10 hours, thereby obtaining a positive electrode active material 5 for a lithium secondary battery.

2. Evaluation of Positive Electrode Active Material 5 for Lithium Secondary Battery

The composition analysis of the obtained positive electrode active material 5 for a lithium secondary battery was performed and the results were applied to the formula (1). As a result, it was found that x = 0.03, y = 0.222, z = 0.267, and w = 0.

With respect to the obtained positive electrode active material 5 for a lithium secondary battery, the average crushing strength was 71.8 MPa, the BET specific surface area was 1.3 $m^2$/g, the average particle diameter $D_{50}$ was 7.8 $\mu$m, the value of A $\times$ B, which is the product of half width A at $2\theta$ = 18.7 $\pm$ 1 ° and half width B at $2\theta$ = 44.4 $\pm$ 1 °, is 0.015, the half width A was 0.120, and the half width B was 0.125.

The determination of the residual lithium content of the positive electrode active material 5 for a lithium secondary battery revealed that the amount of lithium carbonate was 0.15 % by mass and the amount of lithium hydroxide was 0.19 % by mass.

3. Evaluation of Lithium Secondary Battery

A coin-type half cell was produced using the positive electrode active material 5 for a lithium secondary battery, and an initial charge/discharge test was carried out. As a result, the initial charge capacity, the initial discharge capacity and the initial charge/discharge efficiency were respectively 189.6 mAh/g, 174.1 mAh/g and 91.8 %.

A coin-type full cell was produced using the positive electrode active material 5 for a lithium secondary battery, and a low temperature discharge test was carried out at-15 °C. The DC resistances at SOC 15 % and SOC 50 % were 340 $\Omega$ and 301 $\Omega$, respectively.

(Example 6)

1. Production of Positive Electrode Active Material 6 for Lithium Secondary Battery

Into a reaction vessel equipped with a stirrer and an overflow pipe was charged water, followed by addition of an aqueous sodium hydroxide solution. The temperature of the resulting liquid was maintained at 50°C.

An aqueous nickel sulfate solution, an aqueous cobalt sulfate solution and an aqueous manganese sulfate solution were mixed together such that the atomic ratio between nickel atoms, cobalt atoms and manganese atoms became 0.550:0.210:0.240, to thereby prepare a raw material mixture solution.

Then, the obtained raw material mixture solution and an aqueous ammonium sulfate solution as a complexing agent were continuously added to the reaction vessel with stirring, and an oxygen-containing gas obtained by mixing air into nitrogen gas so that the oxygen concentration became 9.5 % was continuously passed through the reaction vessel. An aqueous solution of sodium hydroxide was dropwise added to the reaction vessel at an appropriate timing such that the pH of the solution in the reaction vessel became 12.5, thereby obtaining nickel-cobalt-manganese composite hydroxide particles. The obtained particles were washed, dehydrated by a centrifugal separator, washed, dehydrated, separated and dried at 105 °C to obtain a nickel-cobalt-manganese composite hydroxide 4.

The nickel-cobalt-manganese composite hydroxide 4 and a lithium carbonate powder were weighed such that Li/(Ni + Co + Mn) = 1.06, followed by mixing. The resulting was calcined in ambient atmosphere at 790 °C for 3 hours, followed by further calcination in oxygen atmosphere at 830 °C for 10 hours, thereby obtaining a positive electrode active material 6 for a lithium secondary battery.

2. Evaluation of Positive Electrode Active Material 6 for Lithium Secondary Battery

The composition analysis of the obtained positive electrode active material 6 for a lithium secondary battery was performed and the results were applied to the formula (1). As a result, it was found that x = 0.03, y = 0.208, z = 0.242, and w = 0.

With respect to the obtained positive electrode active material 6 for a lithium secondary battery, the average crushing strength was 13.6 MPa, the BET specific surface area was 2.8 m$^2$/g, the average particle diameter $D_{50}$ was 2.5 $\mu$m, the value of A $\times$ B, which is the product of half width A at $2\theta = 18.7 \pm 1$ ° and half width B at $2\theta = 44.4 \pm 1$ °, is 0.028, the half width A was 0.160, and the half width B was 0.175.

The determination of the residual lithium content of the positive electrode active material 6 for a lithium secondary battery revealed that the amount of lithium carbonate was 0.16 % by mass and the amount of lithium hydroxide was 0.11 % by mass.

3. Evaluation of Lithium Secondary Battery

A coin-type half cell was produced using the positive electrode active material 6 for a lithium secondary battery, and an initial charge/discharge test was carried out. As a result, the initial charge capacity, the initial discharge capacity and the initial charge/discharge efficiency were respectively 192.3 mAh/g, 175.8 mAh/g and 91.4 %.

A coin-type full cell was produced using the positive electrode active material 6 for a lithium secondary battery, and a low temperature discharge test was carried out at-15 °C. The DC resistances at SOC 15 % and SOC 50 % were 463 $\Omega$ and 413 $\Omega$, respectively.

(Example 7)

1. Production of Positive Electrode Active Material 7 for Lithium Secondary Battery

A nickel-cobalt-manganese composite hydroxide 4 was produced following the same procedure as in Example 6.

An LiOH aqueous solution in which WO$_3$ was dissolved at 61g/L was prepared. The prepared W-dissolved LiOH aqueous solution was applied to the nickel-cobalt-manganese composite hydroxide 4 such that W/(Ni + Co + Mn + W) = 0.003 by a Loedige mixer. The nickel-cobalt-manganese composite hydroxide 4 with W adhering thereto and a lithium carbonate powder were weighed such that Li/(Ni + Co + Mn + W) = 1.08, followed by mixing. The resulting was calcined in ambient atmosphere at 790 °C for 3 hours, followed by further calcination in oxygen atmosphere at 860 °C for 10 hours, thereby obtaining a positive electrode active material 7 for a lithium secondary battery.

2. Evaluation of Positive Electrode Active Material 7 for Lithium Secondary Battery

The composition analysis of the obtained positive electrode active material 7 for a lithium secondary battery was performed and the results were applied to the formula (1). As a result, it was found that M was W, x = 0.04, y = 0.208, z = 0.241, and w = 0.003.

With respect to the obtained positive electrode active material 7 for a lithium secondary battery, the average crushing strength was 23.9 MPa, the BET specific surface area was 2.0 $m^2$/g, the average particle diameter $D_{50}$ was 3.4 $\mu$m, the value of A $\times$ B, which is the product of half width A at $2\theta$ = 18.7 $\pm$ 1 $°$ and half width B at $2\theta$ = 44.4 $\pm$ 1 $°$, is 0.023, the half width A was 0.142, and the half width B was 0.163.

The determination of the residual lithium content of the positive electrode active material 7 for a lithium secondary battery revealed that the amount of lithium carbonate was 0.29 % by mass and the amount of lithium hydroxide was 0.30 % by mass.

3. Evaluation of Lithium Secondary Battery

A coin-type half cell was produced using the positive electrode active material 7 for a lithium secondary battery, and an initial charge/discharge test was carried out. As a result, the initial charge capacity, the initial discharge capacity and the initial charge/discharge efficiency were respectively 191.6 mAh/g, 184.1 mAh/g and 96.1 %.

A coin-type full cell was produced using the positive electrode active material 7 for a lithium secondary battery, and a low temperature discharge test was carried out at-15 °C. The DC resistances at SOC 15 % and SOC 50 % were 328 $\Omega$ and 269 $\Omega$, respectively.

(Example 8)

1. Production of Positive Electrode Active Material 8 for Lithium Secondary Battery

Into a reaction vessel equipped with a stirrer and an overflow pipe was charged water, followed by addition of an aqueous sodium hydroxide solution. The temperature of the resulting liquid was maintained at 60 °C.

An aqueous nickel sulfate solution, an aqueous cobalt sulfate solution and an aqueous manganese sulfate solution were mixed together such that the atomic ratio between nickel atoms, cobalt atoms and manganese atoms became 0.750:0.150:0.100, to thereby prepare a raw material mixture solution.

Then, the obtained raw material mixture solution and an aqueous ammonium sulfate solution as a complexing agent were continuously added to the reaction vessel with stirring, and an oxygen-containing gas obtained by mixing air into nitrogen gas so that the oxygen concentration became 7.5 % was continuously passed through the reaction vessel. An aqueous solution of sodium hydroxide was dropwise added to the reaction vessel at an appropriate timing such that the pH of the solution in the reaction vessel became 11.0, thereby obtaining nickel-cobalt-manganese composite hydroxide particles. The obtained particles were washed, dehydrated by a centrifugal separator, washed, dehydrated, separated and dried at 105 °C to obtain a nickel-cobalt-manganese composite hydroxide 5.

$Al_2O_3$ was added to the nickel-cobalt-manganese composite hydroxide 5 such that Al/(Ni + Co + Mn + Al) = 0.05, followed by mixing to obtain a $Al_2O_3$-containing mixed powder. The obtained powder and a lithium carbonate powder were weighed such that Li/(Ni + Co + Mn + Al) = 1.02, followed by mixing. The resulting was calcined in oxygen atmosphere at 750 °C for 5 hours, followed by further calcination in oxygen atmosphere at 800 °C for 5 hours, thereby obtaining a positive electrode active material 8 for a lithium secondary battery.

2. Evaluation of Positive Electrode Active Material 8 for Lithium Secondary Battery

The composition analysis of the obtained positive electrode active material 8 for a lithium secondary battery was performed and the results were applied to the formula (1). As a result, it was found that M was Al, x = 0.01, y = 0.142, z = 0.095, and w = 0.05.

With respect to the obtained positive electrode active material 8 for a lithium secondary battery, the average crushing strength was 30.1 MPa, the BET specific surface area was 1.5 $m^2$/g, the average particle diameter $D_{50}$ was 6.2 $\mu$m, the value of A $\times$ B, which is the product of half width A at $2\theta$ = 18.7 $\pm$ 1 $°$ and half width B at $2\theta$ = 44.4 $\pm$ 1 $°$,

is 0.018, the half width A was 0.134, and the half width B was 0.138.

The determination of the residual lithium content of the positive electrode active material 8 for a lithium secondary battery revealed that the amount of lithium carbonate was 0.36 % by mass and the amount of lithium hydroxide was 0.34 % by mass.

3. Evaluation of Lithium Secondary Battery

A coin-type half cell was produced using the positive electrode active material 8 for a lithium secondary battery, and an initial charge/discharge test was carried out. As a result, the initial charge capacity, the initial discharge capacity and the initial charge/discharge efficiency were respectively 205.4 mAh/g, 197.6 mAh/g and 96.2 %.

A coin-type full cell was produced using the positive electrode active material 8 for a lithium secondary battery, and a low temperature discharge test was carried out at-15 °C. The DC resistances at SOC 15 % and SOC 50 % were 301 $\Omega$ and 262 $\Omega$, respectively.

(Comparative Example 1)

1. Production of Positive Electrode Active Material 9 for Lithium Secondary Battery

A nickel-cobalt-manganese composite hydroxide 1 was produced following the same procedure as in Example 1.

The nickel-cobalt-manganese composite hydroxide 1 and a lithium carbonate powder were weighed such that Li/(Ni + Co + Mn) = 1.00, followed by mixing. The resulting was calcined in ambient atmosphere at 690 °C for 5 hours, followed by further calcination in ambient atmosphere at 850 °C for 6 hours, thereby obtaining a positive electrode active material 9 for a lithium secondary battery.

2. Evaluation of Positive Electrode Active Material 9 for Lithium Secondary Battery

The composition analysis of the obtained positive electrode active material 9 for a lithium secondary battery was performed and the results were applied to the formula (1). As a result, it was found that x = 0.00, y = 0.328, z = 0.356, and w = 0.

With respect to the obtained positive electrode active material 9 for a lithium secondary battery, the average crushing strength was 7.5 MPa, the BET specific surface area was 3.6 m$^2$/g, the average particle diameter $D_{50}$ was 3.0 $\mu$m, the value of A $\times$ B, which is the product of half width A at 2$\theta$ = 18.7 $\pm$ 1 ° and half width B at 2$\theta$ = 44.4 $\pm$ 1 °, is 0.031, the half width A was 0.165, and the half width B was 0.185.

The determination of the residual lithium content of the positive electrode active material 9 for a lithium secondary battery revealed that the amount of lithium carbonate was 0.41 % by mass and the amount of lithium hydroxide was 0.45 % by mass.

3. Evaluation of Lithium Secondary Battery

A coin-type half cell was produced using the positive electrode active material 9 for a lithium secondary battery, and an initial charge/discharge test was carried out. As a result, the initial charge capacity, the initial discharge capacity and the initial charge/discharge efficiency were respectively 172.4 mAh/g, 153.3 mAh/g and 88.9 %.

A coin-type full cell was produced using the positive electrode active material 9 for a lithium secondary battery, and a low temperature discharge test was carried out at-15 °C. The DC resistances at SOC 15 % and SOC 50 % were 710 $\Omega$ and 651 $\Omega$, respectively.

(Comparative Example 2)

1. Production of Positive Electrode Active Material 10 for Lithium Secondary Battery

A nickel-cobalt-manganese composite hydroxide 1 was produced following the same procedure as in Example 1.

The nickel-cobalt-manganese composite hydroxide 1 and a lithium carbonate powder were weighed such that Li/(Ni + Co + Mn) = 1.00, followed by mixing. The resulting was calcined in ambient atmosphere at 690 °C for 5 hours, followed by further calcination in ambient atmosphere at 980 °C for 6 hours, thereby obtaining a positive electrode active material 10 for a lithium secondary battery.

2. Evaluation of Positive Electrode Active Material 10 for Lithium Secondary Battery

The composition analysis of the obtained positive electrode active material 10 for a lithium secondary battery was performed and the results were applied to the formula (1). As a result, it was found that $x = 0$, $y = 0.329$, $z = 0.356$, and $w = 0$.

With respect to the obtained positive electrode active material 10 for a lithium secondary battery, the average crushing strength was 62.1 MPa, the BET specific surface area was 0.8 $m^2/g$, the average particle diameter $D_{50}$ was 3.2 $\mu$m, the value of A $\times$ B, which is the product of half width A at $2\theta = 18.7 \pm 1$ ° and half width B at $2\theta = 44.4 \pm 1$ °, is 0.017, the half width A was 0.128, and the half width B was 0.132.

The determination of the residual lithium content of the positive electrode active material 10 for a lithium secondary battery revealed that the amount of lithium carbonate was 0.18 % by mass and the amount of lithium hydroxide was 0.11 % by mass.

3. Evaluation of Lithium Secondary Battery

A coin-type half cell was produced using the positive electrode active material 10 for a lithium secondary battery, and an initial charge/discharge test was carried out. As a result, the initial charge capacity, the initial discharge capacity and the initial charge/discharge efficiency were respectively 172.9 mAh/g, 154.4mAh/g and 89.3 %.

A coin-type full cell was produced using the positive electrode active material 10 for a lithium secondary battery, and a low temperature discharge test was carried out at-15 °C. The DC resistances at SOC 15 % and SOC 50 % were 621 $\Omega$ and 532 $\Omega$, respectively.

(Comparative Example 3)

1. Production of Positive Electrode Active Material 11 for Lithium Secondary Battery

A nickel-cobalt-manganese composite hydroxide 6 was produced following the same procedure as in Example 5 except that the oxygen concentration was adjusted to 6.2 % and the pH of the solution in the reaction vessel was adjusted to 12.4.

The nickel-cobalt-manganese composite hydroxide 6 and a lithium carbonate powder were weighed such that Li/(Ni + Co + Mn) = 1.00, followed by mixing. The resulting was calcined in ambient atmosphere at 720 °C for 3 hours, followed by further calcination in ambient atmosphere at 875 °C for 10 hours, thereby obtaining a positive electrode active material 11 for a lithium secondary battery.

2. Evaluation of Positive Electrode Active Material 11 for Lithium Secondary Battery

The composition analysis of the obtained positive electrode active material 11 for a lithium secondary battery was performed and the results were applied to the formula (1). As a result, it was found that $x = 0$, $y = 0.222$, $z = 0.266$, and $w = 0$.

With respect to the obtained positive electrode active material 11 for a lithium secondary battery, the average crushing strength was 105.3 MPa, the BET specific surface area was 1.4 $m^2/g$, the average particle diameter $D_{50}$ was 5.2 $\mu$m, the value of A $\times$ B, which is the product of half width A at $2\theta = 18.7 \pm 1$ ° and half width B at $2\theta = 44.4 \pm 1$ °, is 0.019, the half width A was 0.133, and the half width B was 0.144.

The determination of the residual lithium content of the positive electrode active material 11 for a lithium secondary battery revealed that the amount of lithium carbonate was 0.21 % by mass and the amount of lithium hydroxide was 0.18 % by mass.

3. Evaluation of Lithium Secondary Battery

A coin-type half cell was produced using the positive electrode active material 11 for a lithium secondary battery, and an initial charge/discharge test was carried out. As a result, the initial charge capacity, the initial discharge capacity and the initial charge/discharge efficiency were respectively 192.7 mAh/g, 171.6 mAh/g and 89.1 %.

A coin-type full cell was produced using the positive electrode active material 11 for a lithium secondary battery, and a low temperature discharge test was carried out at-15 °C. The DC resistances at SOC 15 % and SOC 50 % were 532 $\Omega$ and 503 $\Omega$, respectively.

(Comparative Example 4)

1. Production of Positive Electrode Active Material 12 for Lithium Secondary Battery

A nickel-cobalt-manganese composite hydroxide 7 was produced following the same procedure as in Example 5 except that the liquid temperature in the reaction vessel was adjusted to 60 °C, the oxygen concentration was adjusted to 0 % and the pH of the solution in the reaction vessel was adjusted to 11.5.
The nickel-cobalt-manganese composite hydroxide 7 and a lithium carbonate powder were weighed such that Li/(Ni + Co + Mn) = 1.04, followed by mixing. The resulting was calcined in ambient atmosphere at 720 °C for 3 hours, followed by further calcination in ambient atmosphere at 900 °C for 10 hours, thereby obtaining a positive electrode active material 12 for a lithium secondary battery.

2. Evaluation of Positive Electrode Active Material 12 for Lithium Secondary Battery

The composition analysis of the obtained positive electrode active material 12 for a lithium secondary battery was performed and the results were applied to the formula (1). As a result, it was found that x = 0.02, y = 0.221, z = 0.265, and w = 0.
With respect to the obtained positive electrode active material 12 for a lithium secondary battery, the average crushing strength was 146.2 MPa, the BET specific surface area was 0.2 $m^2$/g, the average particle diameter $D_{50}$ was 11.2 $\mu$m, the value of A $\times$ B, which is the product of half width A at $2\theta$ = 18.7 $\pm$ 1 ° and half width B at $2\theta$ = 44.4 $\pm$ 1 °, is 0.014, the half width A was 0.116, and the half width B was 0.121.
The determination of the residual lithium content of the positive electrode active material 12 for a lithium secondary battery revealed that the amount of lithium carbonate was 0.18 % by mass and the amount of lithium hydroxide was 0.26 % by mass.

3. Evaluation of Lithium Secondary Battery

A coin-type half cell was produced using the positive electrode active material 12 for a lithium secondary battery, and an initial charge/discharge test was carried out. As a result, the initial charge capacity, the initial discharge capacity and the initial charge/discharge efficiency were respectively 194.7 mAh/g, 169.2 mAh/g and 86.9 %.
A coin-type full cell was produced using the positive electrode active material 12 for a lithium secondary battery, and a low temperature discharge test was carried out at-15 °C. The DC resistances at SOC 15 % and SOC 50 % were 854 $\Omega$ and 621 $\Omega$, respectively.

(Comparative Example 5)

1. Production of Positive Electrode Active Material 13 for Lithium Secondary Battery

A nickel-cobalt-manganese composite hydroxide 8 was produced following the same procedure as in Example 6 except that the liquid temperature in the reaction vessel was adjusted to 60 °C, the oxygen concentration was adjusted to 0 % and the pH of the solution in the reaction vessel was adjusted to 11.5.
The nickel-cobalt-manganese composite hydroxide 8 and a lithium carbonate powder were weighed such that Li/(Ni + Co + Mn) = 1.04, followed by mixing. The resulting was calcined in ambient atmosphere at 790 °C for 3 hours, followed by further calcination in oxygen atmosphere at 850 °C for 10 hours, thereby obtaining a positive electrode active material 13 for a lithium secondary battery.

2. Evaluation of Positive Electrode Active Material 13 for Lithium Secondary Battery

The composition analysis of the obtained positive electrode active material 13 for a lithium secondary battery was performed and the results were applied to the formula (1). As a result, it was found that x = 0.02, y = 0.209, z = 0.241, and w = 0.
With respect to the obtained positive electrode active material 13 for a lithium secondary battery, the average crushing strength was 115.6 MPa, the BET specific surface area was 3.2 $m^2$/g, the average particle diameter $D_{50}$ was 10.8 $\mu$m, the value of A $\times$ B, which is the product of half width A at $2\theta$ = 18.7 $\pm$ 1 ° and half width B at $2\theta$ = 44.4 $\pm$ 1 °, is 0.015, the half width A was 0.119, and the half width B was 0.123.
The determination of the residual lithium content of the positive electrode active material 13 for a lithium secondary battery revealed that the amount of lithium carbonate was 0.23 % by mass and the amount of lithium hydroxide was 0.27 % by mass.

3. Evaluation of Lithium Secondary Battery

A coin-type half cell was produced using the positive electrode active material 13 for a lithium secondary battery, and an initial charge/discharge test was carried out. As a result, the initial charge capacity, the initial discharge capacity and the initial charge/discharge efficiency were respectively 195.5 mAh/g, 172.4 mAh/g and 88.2 %.

A coin-type full cell was produced using the positive electrode active material 13 for a lithium secondary battery, and a low temperature discharge test was carried out at-15 °C. The DC resistances at SOC 15 % and SOC 50 % were 583 Ω and 552 Ω, respectively.

With respect to each of the positive electrode active materials of Examples 1 to 8 and Comparative Examples 1 to 5, Table 1 below collectively shows the composition, the average crushing strength, the BET specific surface area, the half width values of the powder X-ray diffraction peaks, the amount of residual lithium, the initial charge/discharge capacity, the initial discharge capacity, the initial discharge efficiency, and the DC resistance at -15 °C.

[Table 1]

| Composition | | | | | | Average crushing strength | BET | Average particle diameter | Half width of peaks in powder X-ray diffraction measurement | | | Residual Lithium | | Initial charge capacity | Initial discharge capacity | Initial charge/ discharge efficiency | DC resistance at -15°C | |
|---|---|---|---|---|---|---|---|---|---|---|---|---|---|---|---|---|---|---|
| Li | Ni | Co | Mn | M | Type of element M | | | $D_{50}$ | AxB | A (18.7±1°) | B (44.4±1°) | $Li_2CO_3$ | LiOH | | | | SOC15% | SOC50% |
| x | 1-y-z-w | y | z | w | | Mpa | m²/g | $\mu$m | (degree)² | degree | degree | wt. % | wt. % | mAh/g | mAh/g | % | Ω | Ω |
| 0.06 | 0.316 | 0.328 | 0.356 | 0 | - | 52.2 | 2.4 | 3.4 | 0.020 | 0.134 | 0147 | 0.10 | 0.11 | 170.4 | 161.1 | 94.5 | 423 | 384 |
| 0.06 | 0.314 | 0.327 | 0.354 | 0.005 | W | 54.0 | 2.0 | 3.6 | 0.023 | 0.141 | 0.161 | 0.17 | 0.11 | 170.6 | 161.2 | 94.5 | 296 | 269 |
| 0.06 | 0.315 | 0.328 | 0.354 | 0.003 | Zr | 57.6 | 2.4 | 3.5 | 0.021 | 0.133 | 0.161 | 0.15 | 0.12 | 170.5 | 160.2 | 94.0 | 298 | 271 |
| 0.04 | 0.314 | 0.328 | 0.355 | 0.003 | Mg | 92.6 | 1.1 | 9.8 | 0.019 | 0.133 | 0.142 | 0.04 | 0.10 | 173.4 | 157.1 | 90.6 | 480 | 332 |
| 0.03 | 0.511 | 0.222 | 0.267 | 0.000 | - | 71.8 | 1.3 | 7.8 | 0.015 | 0.120 | 0.125 | 0.15 | 0.19 | 189.6 | 174.1 | 91.8 | 340 | 301 |
| 0.03 | 0.550 | 0.208 | 0.242 | 0.000 | - | 13.6 | 2.8 | 2.5 | 0.028 | 0.160 | 0.175 | 0.16 | 0.11 | 192.3 | 175.8 | 91.4 | 463 | 413 |
| 0.04 | 0.548 | 0.208 | 0.241 | 0.003 | W | 23.9 | 2.0 | 3.4 | 0.023 | 0.142 | 0.163 | 0.29 | 0.30 | 191.6 | 184.1 | 96.1 | 328 | 269 |
| 0.01 | 0.713 | 0.142 | 0.095 | 0.050 | Al | 30.1 | 1.5 | 6.2 | 0.018 | 0.134 | 0.138 | 0.36 | 0.34 | 205.4 | 197.6 | 96.2 | 301 | 262 |
| 0.00 | 0.316 | 0.328 | 0.356 | 0.000 | - | 7.5 | 3.6 | 3.0 | 0.031 | 0.165 | 0.185 | 0.41 | 0.45 | 172.4 | 153.3 | 88.9 | 710 | 651 |
| 0.00 | 0.315 | 0.329 | 0.356 | 0.000 | - | 62.1 | 0.8 | 3.2 | 0.017 | 0.128 | 0.132 | 0.18 | 0.11 | 172.9 | 154.4 | 89.3 | 621 | 532 |
| 0.00 | 0.512 | 0.222 | 0.266 | 0.000 | - | 105.3 | 1.4 | 5.2 | 0.019 | 0.133 | 0.144 | 0.21 | 0.18 | 192.7 | 171.6 | 89.1 | 532 | 503 |
| 0.02 | 0.514 | 0.221 | 0.265 | 0.000 | - | 146.2 | 0.2 | 11.2 | 0.014 | 0.116 | 0.121 | 0.18 | 0.26 | 194.7 | 169.2 | 86.9 | 854 | 621 |
| 0.02 | 0.550 | 0.209 | 0.241 | 0.000 | - | 115.6 | 3.2 | 10.8 | 0.015 | 0.119 | 0.123 | 0.23 | 0.27 | 195.5 | 172.4 | 88.2 | 583 | 522 |

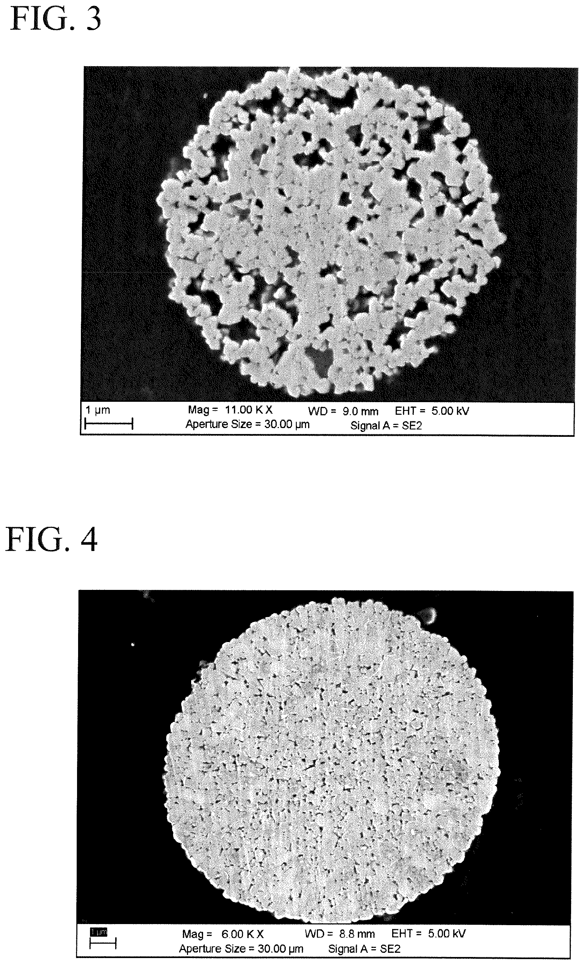

FIG. 3 shows an SEM image of the cross section of a secondary particle obtained in Example 2.

FIG. 4 shows an SEM image of the cross section of a secondary particle obtained in Comparative Example 4.

As apparent from the above results, in all of Examples 1 to 8 to which the present invention was applied, the initial charge/discharge efficiency was as high as 90 % or more. In addition, in Examples 1 to 8 to which the present invention was applied, the results of the low-temperature discharge test showed that the DC resistance was low even at a low temperature.

As shown in FIG. 3, the observation of the cross-sectional view of the secondary particle obtained in Example 2 to which the present invention was applied clearly shows that the secondary particle was a particle with many voids.

On the other hand, in all of Comparative Examples 1 to 5 to which the present invention was not applied, the initial charge/discharge efficiency was as low as 90 % or less. In addition, in the low-temperature discharge test, the results of the low-temperature discharge test showed that the DC resistance was high at a low temperature.

As shown in FIG. 4, the observation of the cross-sectional view of the secondary particle obtained in Comparative Example 4 to which the present invention was applied clearly shows that the secondary particle was a dense particle with almost no void.

INDUSTRIAL APPLICABILITY

The present invention can provide a positive electrode active material for a lithium secondary battery excellent in initial charge/discharge efficiency, a positive electrode for a lithium secondary battery using the positive electrode active material for a lithium secondary battery, and a lithium secondary battery having the positive electrode for a lithium secondary battery. Therefore, the present invention has industrial applicability.

DESCRIPTION OF THE REFERENCE SIGNS

1    Separator
2    Positive electrode
3    Negative electrode
4    Electrode group
5    Battery can
6    Electrolytic liquid
7    Top insulator
8    Sealing body
10   Lithium secondary battery
21   Positive electrode lead
31   Negative electrode lead

**Claims**

1. A positive electrode active material for a lithium secondary battery, comprising a powder of a lithium metal composite oxide represented by formula (1):

$$Li[Li_x(Ni_{(1-y-z-w)}Co_yMn_zM_w)_{1-x}]O_2 \qquad (1),$$

wherein M is one or more elements selected from the group consisting of Fe, Cu, Ti, Mg, Al, W, B, Mo, Nb, Zn, Sn, Zr, Ga and V, $-0.1 \leqq x \leqq 0.2$, $0 < y \leqq 0.4$, $0 < z \leqq 0.4$, $0 \leqq w \leqq 0.1$, $0.25 < y + z + w$, wherein:

the powder of lithium metal composite oxide comprises primary particles and secondary particles that are aggregates of the primary particles,
a BET specific surface area of the positive electrode active material for the lithium secondary battery is $1 m^2/g$ or more and $3 m^2/g$ or less, and
an average crushing strength of the secondary particles is 10 MPa or more and 100 MPa or less.

2. The positive electrode active material according to claim 1, wherein $y < z$ in the formula (1).

3. The positive electrode active material according to claim 1 or 2, which has an average particle diameter of 2 μm or more and 10 μm or less.

4. The positive electrode active material according to any one of claims 1 to 3, wherein a product of A and B is 0.014 or more and 0.030 or less, wherein A is a half width of a diffraction peak within a peak region of 2θ = 18.7 ± 1 °, and B is a half width of a diffraction peak within a peak region of 2θ = 44.4 ± 1 °, each of the diffraction peaks being obtained by a powder X-ray diffraction measurement using CuKα ray.

5. The positive electrode active material according to claim 4, wherein the half width A is within a range of 0.115 or more and 0.165 or less.

6. The positive electrode active material according to claim 4 or 5, wherein the half width value B is within a range of 0.120 or more and 0.180 or less.

7. The positive electrode active material according to any one of claims 1 to 6, wherein an amount of lithium carbonate component contained in the positive electrode active material is 0.4 % by mass or less based on the total mass of the positive electrode active material.

8. The positive electrode active material according to any one of claims 1 to 7, wherein an amount of lithium hydroxide component contained in the positive electrode active material is 0.35 % by mass or less based on the total mass of the positive electrode active material.

9. A positive electrode for a lithium secondary battery, comprising the positive electrode active material of any one of claims 1 to 8.

10. A lithium secondary battery, comprising the positive electrode of claim 9.

## FIG. 1A

## FIG. 1B

FIG. 2A

FIG. 2B

## FIG. 3

| 1 µm | Mag = 11.00 K X | WD = 9.0 mm | EHT = 5.00 kV |
|---|---|---|---|
| | Aperture Size = 30.00 µm | Signal A = SE2 | |

## FIG. 4

| 1 µm | Mag = 6.00 K X | WD = 8.8 mm | EHT = 5.00 kV |
|---|---|---|---|
| | Aperture Size = 30.00 µm | Signal A = SE2 | |

## INTERNATIONAL SEARCH REPORT

| International application No. |
|---|
| PCT/JP2017/031443 |

**A. CLASSIFICATION OF SUBJECT MATTER**
*H01M4/525*(2010.01)i, *H01M4/505*(2010.01)i

According to International Patent Classification (IPC) or to both national classification and IPC

**B. FIELDS SEARCHED**

Minimum documentation searched (classification system followed by classification symbols)
H01M4/525, H01M4/505

Documentation searched other than minimum documentation to the extent that such documents are included in the fields searched
Jitsuyo Shinan Koho        1922–1996   Jitsuyo Shinan Toroku Koho   1996–2017
Kokai Jitsuyo Shinan Koho  1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2011-119092 A  (Toyota Motor Corp.), 16 June 2011 (16.06.2011), claims; paragraphs [0009], [0010], [0013], [0015], [0031], [0034], [0035], [0041], [0044], [0045]; examples & US 2012/0282525 A1 claims; paragraphs [0013], [0014], [0017], [0019], [0045], [0048], [0049], [0055], [0058], [0059]; examples & WO 2011/067982 A1        & EP 2509142 A1 & CN 102612772 A          & KR 10-2012-0099108 A | 1-10 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 September 2017 (25.09.17) | 10 October 2017 (10.10.17) |

| Name and mailing address of the ISA/ Japan Patent Office 3-4-3,Kasumigaseki,Chiyoda-ku, Tokyo 100-8915,Japan | Authorized officer Telephone No. |
|---|---|

Form PCT/ISA/210 (second sheet) (January 2015)

**INTERNATIONAL SEARCH REPORT**

International application No.

PCT/JP2017/031443

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2007-257985 A  (Sumitomo Metal Mining Co., Ltd.),<br>04 October 2007 (04.10.2007),<br>paragraph [0053]<br>& US 2007/0248883 A1<br>paragraph [0058]<br>& EP 1837936 A2          & CN 101047237 A | 1-10 |
| Y | WO 2002/086993 A1  (Yuasa Corp.),<br>31 October 2002 (31.10.2002),<br>claims; examples; fig. 6<br>& EP 1391950 A1<br>claims; examples; fig. 6 | 2,4-6 |
| Y | JP 2009-59710 A  (GS Yuasa Corp.),<br>19 March 2009 (19.03.2009),<br>claims; paragraphs [0042], [0043]; examples<br>& EP 1372202 A1<br>claims; paragraphs [0027], [0028]; examples | 2,4-6 |
| Y | JP 2016-76470 A  (Hitachi Metals, Ltd.),<br>12 May 2016 (12.05.2016),<br>claims; paragraphs [0020], [0028]; examples<br>& US 2016/0099460 A1<br>claims; paragraphs [0027], [0035]; examples<br>& KR 10-2016-0041004 A | 7,8 |
| Y | JP 2013-143358 A  (Toyota Motor Corp.),<br>22 July 2013 (22.07.2013),<br>claims; paragraphs [0043], [0044]; examples<br>(Family: none) | 7,8 |

Form PCT/ISA/210 (continuation of second sheet) (January 2015)

# EP 3 509 143 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2016169816 A
- JP 2001080920 A
- JP 2004335152 A
- WO 2005124898 A
- JP 2007257985 A
- JP 2011119092 A
- JP 2013232318 A
- JP 2002201028 A

### Non-patent literature cited in the description

- **HIRAMATSU et al.** *Journal of the Mining and Metallurgical Institute of Japan,* 1965, vol. 81
- **YOSHIO WASEDA ; EIICHIRO MATSUBARA.** X-ray structural analysis - determination of arrangement of atoms. 30 April 2002